(19) Europäisches Patentamt / European Patent Office / Office européen des brevets

(11) **EP 3 224 964 B1**

(12) **EUROPEAN PATENT SPECIFICATION**

(45) Date of publication and mention of the grant of the patent:
**27.11.2019 Bulletin 2019/48**

(51) Int Cl.:
**H04B 7/0452** (2017.01)   **H04B 7/0456** (2017.01)

(21) Application number: **15750803.7**

(86) International application number:
**PCT/GB2015/052234**

(22) Date of filing: **31.07.2015**

(87) International publication number:
**WO 2016/083772 (02.06.2016 Gazette 2016/22)**

(54) **MAXIMIZING ENERGY EFFICIENCY IN NON-LINEAR PRECODING USING VECTOR PERTURBATION**

MAXIMIERUNG DER ENERGIEEFFIZIENZ IN DER NICHTLINEAREN VORCODIERUNG MITTELS VEKTORPERTURBATION

MAXIMISATION DE RENDEMENT ÉNERGÉTIQUE DANS LE PRÉCODAGE NON LINÉAIRE UTILISANT UNE PERTURBATION DE VECTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.11.2014 GB 201420944**

(43) Date of publication of application:
**04.10.2017 Bulletin 2017/40**

(73) Proprietor: **University of Surrey**
**Surrey GU2 7XH (GB)**

(72) Inventors:
• **MA, Yi**
  **Guildford**
  **Surrey GU2 7XH (GB)**
• **YI, Na**
  **Guildford**
  **Surrey GU2 7XH (GB)**
• **TAFAZOLLI, Rahim**
  **Guildord**
  **Surrey GU2 7XH (GB)**

(74) Representative: **Hewett, Jonathan Michael Richard et al**
  **Venner Shipley LLP**
  **200 Aldersgate**
  **London EC1A 4HD (GB)**

(56) References cited:
**EP-A2- 2 104 259**

• **MASOUROS CHRISTOS ET AL: "Maximizing Energy Efficiency in the Vector Precoded MU-MISO Downlink by Selective Perturbation", IEEE TRANSACTIONS ON WIRELESS COMMUNICATIONS, IEEE SERVICE CENTER, PISCATAWAY, NJ, US, vol. 13, no. 9, 1 September 2014 (2014-09-01), pages 4974-4984, XP011558614, ISSN: 1536-1276, DOI: 10.1109/TWC.2014.2329480 [retrieved on 2014-09-08]**

## Description

### Technical Field

The present invention relates to signal transmission, and particularly, but not exclusively to baseband non-linear precoding involving a massive number of transmit antennas.

### Background Art

Baseband non-linear precoding, involving large number of transmit-antennas (referred to as a multiple input and multiple output (MIMO) system), is an open problem in the areas of signal processing and wireless communications. By solving this problem, both the throughput and energy efficiency of wireless network downlink can be improved several-fold.

Precoding is the application of a signal processing operation to a source signal prior to transmission across a communications channel, in a way which optimises the transmission and/or detection of the source signal. For example, the energy associated with the transmitted signal can be optimised by performing appropriate precoding. Alternatively, or in addition, the bit error rate of signal detection can be reduced if precoding is applied in a way which takes account of expected properties of a communications channel.

Mathematically, non-linear MIMO precoding can be described in the form of an integer least-square problem with information dynamics, as described by M. Tomlinson in "New automatic equaliser employing modulo arithmetic", Electron. Lett., vol. 7, pp. 138-139, Mar. 1971, and by H. Harashima and H. Miyakawa in "Matched-transmission technique for channels with intersymbol interference," IEEE Trans. Commun., vol. COM-20, pp. 774-780, Aug. 1972.

In theory, such problem can be solved by means of maximum-likelihood (ML) search over a set of finite alphabets, which yields the optimum solution when the size of finite alphabets is sufficiently large, as described by B. H. Hochwald, C. B. Peel, and A. L. Swindlehurst, in "A vector perturbation technique for near-capacity multiantenna multiuser communication - Part II: perturbation," IEEE Trans. Commun., vol. 53, pp. 537 - 544, vol. 53, March 2005. However, the searching range increases exponentially with respect to the size of MIMO as well as the size of finite-alphabet set. Due to the poor scalability as such, ML is not practically implementable for the cases involving large number of transmit antennas (e.g. > 4).

In the area of computer science, the computational complexity of ML can be reduced by means of tree search or trellis search, which is known as the sphere precoding or the Viterbi algorithm. However, the tree/trellis searching scheme is still too complex to implement, and it does not solve the scalability problem. To this date, the best scalable approaches are linear precoders mainly referring to the zero-forcing (ZF) precoding and minimum mean-square error (MMSE) precoding. These linear approaches can offer good sub-optimum performance for the size of the MIMO system as four transmit antennas or less. However their performance can be 10-30dB away from the optimum when the size of the MIMO system becomes large (e.g. 16 transmit antennas or more).

In the last two decades, substantial research efforts have been made in the areas of signal processing in order to find good trade-off between performance and scalability, such as those described by F. Rusek et al in "Scaling up MIMO: opportunities and challenges with very large arrays," IEEE Signal Processing Magazine, pp. 40-60, Jan. 2013. Nevertheless, none of them can offer satisfactory performances and acceptable scalability at the same time.

"Maximising Energy Efficiency in the Vector Precoded MU-MISO Downlink by Selective Perturbation" by Masouros Christos et al, IEEE transacitons on wireless communications vo. 13, no. 9, September 2014 discloses an energy-efficient vector perturbation technique for multi-user MISO systems.

European Patent Application EP 2,104,259 discloses another example of precoding by perturbation prior to MIMO transmission.

### Summary of Invention

The invention is defined by the independent claims 1 (device), 9 (method) and 10 (computer implemented program). Advantageous embodiments are described in the dependent claims. While several embodiments and/or examples are disclosed in this description, the subject matter for which protection is sought is strictly and solely limited to those embodiments and/ or examples encompassed by the scope of the appended claims. Embodiments and/or examples mentioned in the description that do not fall under the scope of the claims are useful for understanding the invention. According to an aspect of the present invention there is provided a signal precoder for use with a signal transmitter comprising a plurality of antennas for transmitting a plurality of signal components to a receiver over a communications channel in which one or more properties of the communications channel are described by a plurality of values which scale the components of the signal in a plurality of dimensions during transmission, the precoder arranged to perform non-linear precoding on a source signal $\underline{S}$ prior to signal transmission, the precoder comprising a balancer for determining a plurality of optimised amounts of signal perturbation required to be applied to one or more source signal components to minimise the energy of the signal transmission, when respectively scaled by each of the values describing one or more properties of the communications channel, and a selector for selecting which of the optimised amounts of signal perturbations results in signal transmission having the least energy when scaled by the values describing the one or more properties of the communications channel, wherein the one or more properties of the communications channel are contained in a channel matrix **H**; and a feature extractor for selecting a subset, $L$ of the plurality of $M$ singular values $\lambda$ obtained by singular value decomposition of channel matrix **H**, for $1 \leq L < M$, which, when applied to the signal, perform a predetermined proportion of the scaling of the signal components; wherein the precoder is arranged to perform non-linear precoding on the source signal by applying the selected optimised signal perturbation to the source signal and to output the precoded signal. Where the amount of perturbation is represented by an auxiliary vector **A** having integer components, scaled by a coefficient $\alpha$ which is dependent on the modulation of **S**, the balancer is arranged to perform the optimisation by optimising one or more components of **A** which minimise the quantity $|\lambda_l \underline{v}_l(\underline{S} + a\mathbf{A})|^2$ for each $l^{th}$ singular value $\lambda_l$ and $l^{th}$ right-singular vector, $\mathbf{v}_l$, of **H** where $1 \leq l \leq L$.

The subset of values may be as low as 2-3% of the total number of values describing one or more properties of the communications channel, and the predetermined scaling proportion may be 99% or more. Consequently, computational complexity can be significantly reduced.

The feature extractor may be arranged to select a predetermined subset of the plurality of values describing the communications channel, or to determine a predetermined subset using a look-up table, in dependence upon the modulation of the source signal. The allows the transmission energy to be further reduced.

The signal precoder may comprise a transform module for equalising the one or more properties of the communications channel by processing the precoded signal prior to transmission.

The balancer may be configured to determine a plurality of optimised amounts of signal perturbation required to be applied to only two signal components to minimise the energy of the signal transmission. This reduces complexity to from the order of $K^M$ to the order of $K$, where $K$ is the size of the symbol alphabet of the source signal, and $M$ is the number of the plurality of components.

According to another aspect of the present invention, there is provided a signal transmitter containing the signal precoder, in which the signal transmitter may have a plurality of antennas representing a multiple input multiple output MIMO communications module of a size which is at least 64 by 64. The benefits of the present invention thus apply to "massive" MIMO arrays.

According to another aspect of the present invention, there is provided a communications system comprising the transmitter and further comprising a plurality of access points arranged to receive signals from the signal transmitter via an interface, and a plurality of receivers arranged to receive signals transmitted via the access points.

The communications system may be a cloud-based radio access network, and the interface may be the fronthaul network.

According to another aspect of the present invention, there is provided a method of precoding a signal comprising a plurality of signal components for transmission over a communications channel, the method comprising describing one or more properties of the communications channel with a plurality of values which scale the components of the signal in a plurality of dimensions during transmission, receiving a source signal **S**, and performing non-linear precoding on the source signal, the precoding comprising determining a plurality of optimised amounts of signal perturbation required to be applied to one or more source signal components to minimise the energy of the signal transmission, when respectively scaled by each of the values describing one or more properties of the communications channel, and selecting which of the optimised amounts of signal perturbations results in signal transmission having the least energy when scaled by the values describing the one or more properties of the communications channel, wherein the one or more properties of the communications channel are contained in a channel matrix **H**; selecting a subset, $L$ of the plurality of $M$ singular values $\lambda$ obtained by singular value decomposition of channel matrix **H**, for $1 \leq L < M$, which, when applied to the signal, perform a predetermined proportion of the scaling of the signal components; wherein non-linear precoding is performed on the source signal by applying the selected optimised signal perturbation to the source signal and the precoded signal is output for transmission. Where the amount of perturbation is represented by an auxiliary vector **A** having integer components, scaled by a coefficient $\alpha$ which is dependent on the modulation of **S**, the balancer performs the optimisation by optimising one or more components of **A** which minimise the quantity $|\lambda_l \underline{v}_l(\underline{S} + a\underline{\mathbf{A}})|^2$ for each $l^{th}$ singular value $\lambda_l$ and $l^{th}$ right-singular vector, $\mathbf{v}_l$, of **H** where $1 \leq l \leq L$.

According to another aspect of the present invention, there is provided a computer program which, when executed by a processor is arranged to perform the method as described above.

The embodiments of the present invention are the only technique that can offer near-optimum detection performances and linear computational scalability simultaneously. When the MIMO size is small (e.g. 12x12 MIMO or smaller), the disclosed technique offers achievable rate very close to the optimum non-linear precoding. For the case of massive MIMO (e.g. 64x64 MIMO) when optimum non-linear precoding operations does not work, the disclosed technique outperforms linear MIMO precoding by a factor of three in terms of achievable transmission rate, and by at least 6dB in terms of the energy efficiency of the signal transmission.

With these distinctive features, the disclosed technique breaks the signal-processing bottleneck, and brings massive MIMO downlink and networked MIMO downlink to reality.

The present invention can support any part of the radio spectrum including visible-light MIMO systems, and including point-to-point, co-located and distributed symmetric and asymmetric MIMO systems. The present invention can support massive MIMO access point systems (with, for example, 64, 128, 256, 512 or 1024 or higher receive antennas), enabling super-fast and energy efficient communications of several hundreds of gigabibits per second or terabits per second depending on number of antennas, modulation level and bandwidth.

## Brief Description of Drawings

Embodiments of the present invention will be described below, by way of example only, with reference to the accompanying drawings in which:

Figure 1 illustrates an example of non-linear MIMO precoding;

Figure 2 illustrates a general model of the massive array processing problem;

Figure 3 illustrates a signal transmitter according to an embodiment of the present invention;

Figure 4 illustrates vector balancing as performed by the precoder of the transmitter of Figure 3;

Figure 5 illustrates a signal precoder according to an embodiment of the present invention;

Figure 6 illustrates a selection component contained in the precoder of Figure 5;

Figure 7 illustrates a flow chart of iterative power minimisation as performed by a precoder according to an embodiment of the present invention;

Figure 8 illustrates a simulation of achievable data rates possible using 4x4 non-linear MIMO precoding according to an embodiment of the present invention; and

Figure 9 illustrates the data rates achievable with a massive MIMO configuration of embodiments of the present invention.

## Description of Preferred Embodiments

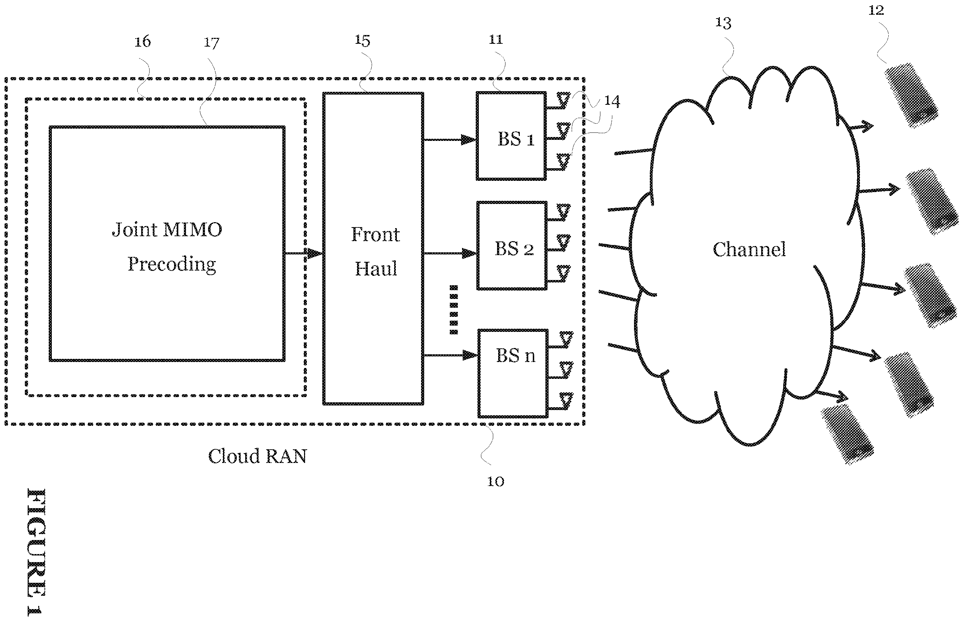

Figure 1 illustrates an example of non-linear MIMO precoding with the application in cloud radio access networks (RANs). The RAN architecture 10 involves $n$ access points (AP) 11, (also referred to as remote radio heads or base stations (BS)), and a massive number (such as >32) of receivers 12, such as mobile terminals, which communicate with the access points 11 over a communications channel 13. Each BS has multiple antennas 14 for transmitting signals.

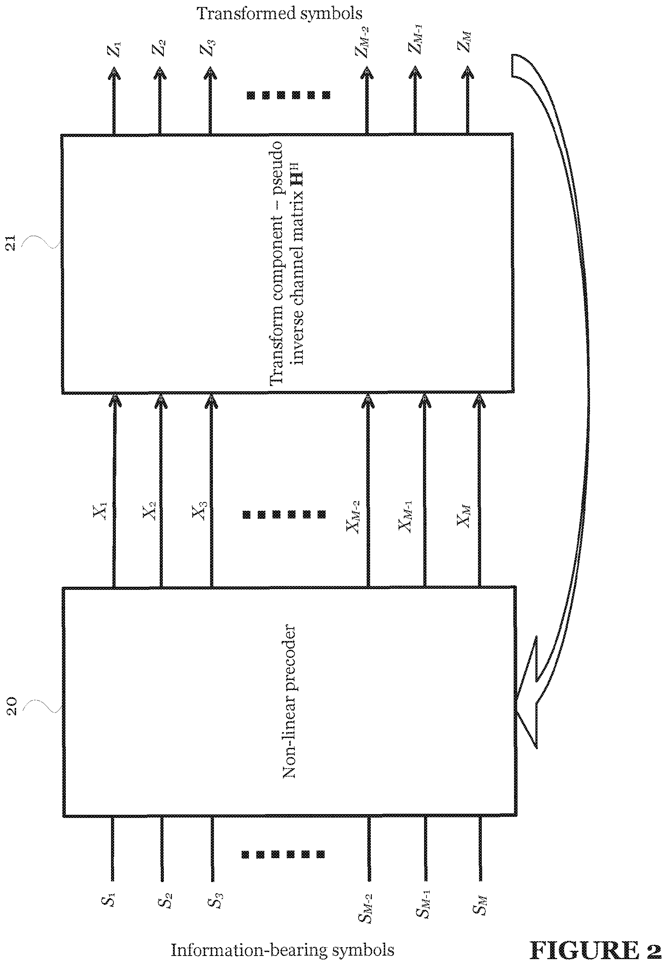

In the cloud 16, joint MIMO precoding is employed by a joint MIMO precoding component 17 to optimally pre-process the signals for transmission to the receivers 12. The joint MIMO precoding component 17 will be described in more detail with respect to the generalisation shown in Figure 2, and can be understood as part of a signal transmitter which performs transmission of signals from the cloud to the communications channel 13 via the fronthaul 15. "Joint" MIMO precoding refers to the process of performing parallel precoding for all of the components of a signal for transmission to the receivers 12.

This example falls into a general framework of a non-linear MIMO precoding problem, which is illustrated in Figure 2. A group of parallel data streams or waveforms ($S_1$, $S_2$, ..., $S_M$), represented as vector $\underline{S}$, are first fed into a non-linear precoding component 20. $\underline{S}$ will be referred to herein as the "source signal" for transmission. The plurality of waveforms may represent symbols of a modulation scheme such as quadrature amplitude modulation (QAM). The output of the non-linear precoding component 20 is a signal $\underline{X}$ containing components ($X_1$, $X_2$, ..., $X_M$), which is fed into a transform component 21. The transform component 21 applies the pseudo-inverse, also referred to as the Hermitian conjugate $\mathbf{H}^H$ or $\mathbf{H}^\dagger$, of the channel matrix $\mathbf{H}$ to signal $\underline{X}$ and the output is the transmission signal $\underline{Z}$, containing components ($Z_1$, $Z_2$, ..., $Z_M$), which is transmitted to receivers 12. The operation of the non-linear precoder 20 involves feedback of properties of the components of $\underline{Z}$, to be described in more detail below.

In mobile communications, the channel matrix $\mathbf{H}$ can be a linear transform matrix (LTM) which can represent aspects of the transmission channel 13 such as the configuration of MIMO channels, user signatures in multi-carrier systems such as CDMA, the inverse or discrete Fast Fourier Transform (IFFT/IDFT) matrix in orthogonal frequency-division multiplexing (OFDM) systems, linear precoding/beamforming operations, the effect of a pulse shaping filter, as well as many other linear physical distortions in mobile channels. The matrix thus contains information representing or modelling one or more of a number of properties associated with the configuration of the transmission scheme or protocol which is used for the signal. In some embodiments of the present invention, the representation is achieved by the singular values of a singular value decomposition of the channel matrix, and the detailed embodiments are described in connection with this example, but it will be appreciated that the channel information may instead be represented as a series of scaling factors to be applied to a source signal having multiple components in multiple dimensions during signal transmission.

The principle behind multiplying a signal $\underline{X}$ by the pseudo-inverse matrix $\mathbf{H}^H$ in the transform component can be understood in terms of equalising the effect of the transmission channel before transmission, so that the receiver can detect the signal which was originally transmitted. In other words, based on the mathematical property that $\mathbf{HH}^H = \mathbf{I}$, the identity matrix, which is a property which applies to the channel matrix employed in embodiments of the present invention (so that $\mathbf{HH}^H = \mathbf{HH}^{-1}$), the effect of a channel matrix $\mathbf{H}$ on a transmission signal $\underline{Z} = \mathbf{H}^H\underline{X}$ is such that an ideally received signal is $\mathbf{H}\underline{Z} = \mathbf{H}(\mathbf{H}^H\underline{X}) = \underline{X}$, and thus the receiver can recover the precoded signal $\underline{X}$, given a sufficiently high signal to noise ratio. In reality, a noise component will be introduced by the signal transmission, which means that a received signal $\underline{Y}$ may be represented as $\underline{Y} = \mathbf{H}\underline{Z} + \underline{n}$, for noise vector $\underline{n}$.

The principle of operation of the non-linear precoding component will now be described. In the absence of precoding, $\underline{X} = \underline{S}$, the source signal. In this situation, the energy in the transmitted signal can be represented as the norm of vector $\underline{Z}$, namely $\|\underline{Z}\|^2 = \|\mathbf{H}^{-1}\underline{X}\|^2 = \|\mathbf{H}^{-1}\underline{S}\|^2$.

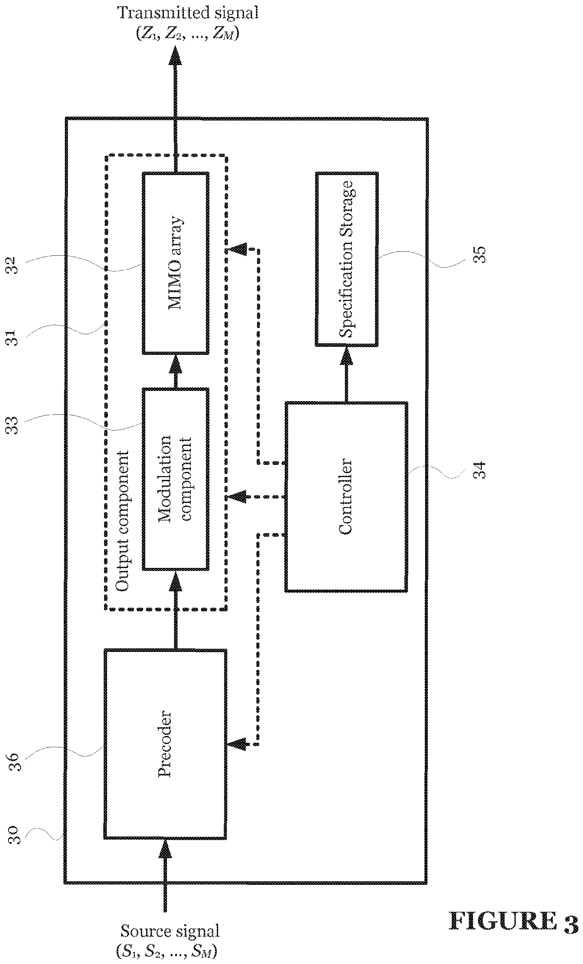

A signal transmitter 30 according to an embodiment of the present invention is shown in Figure 3. The transmitter 30 includes a signal output component 31 or "output stage" which transmits signals to one or more receivers over a communications channel. The signal output component 31 may be further configured as a signal receiver, so that the signal transmitter 30 may be arranged as a signal transceiver in some embodiments.

The signal output component 31 may include antennas of a MIMO array 32. In this regard, the signal output component 31 is configured such that it can support point-to-point, co-located and distributed MIMO systems. The MIMO array 32 may be symmetric, having the same number of inputs as outputs, or may be asymmetric, having different numbers of inputs and outputs. The signal output component 30 may include a modulation component 33 which mixes a transmission signal with a tunable oscillator for transmission at a particular frequency, and applies one of any suitable transmission scheme which is appropriate for the particular communications channel and the intended signal receiver.

The signal transmitter 30 can form a separate component of, or be integral with a signal processing device which performs signal generation and processing, such as a broadcast server. To this effect, the signal transmitter 30 of the invention may receive a source signal from an external device, or may generate its own source signal as part of an integrated device, including signal processing stages such as filtering and DAC/ADC stages for conversion between analogue and digital signal domains.

The signal transmitter 30 contains a controller 34 which controls the overall operation of the signal transmitter 30 and its components. In the case where the signal transmitter is integrated into another device, the controller 34 may be embodied as the main controller of the host device, or may be a slave controller of the main controller.

In Figure 3, it is assumed that the source signal is generated externally and provided to the signal transmitter 30 in the illustrated embodiment of the present invention. The signal contains $M$ components ($S_1$, $S_2$,..., $S_M$) which may represent different symbols in an alphabet, or multiplexed waveforms for different receivers. The source signal may be a baseband signal and may be analogue or digital.

The signal transmitter 30 also contains a power supply, a ROM for storing processing instructions if the controller is implemented in software (not shown), and various networking connections for interfacing with other transmitters or signal providers, and for outputting diagnostic and status information to network controllers.

The signal transmitter 30 stores a specification of the transmission scheme used to modulate the source signal, and information describing the communications channel, such as a linear transform matrix as described in relation to Figure 2. The information is stored in a specification storage module 35.

The signal transmitter 30 contains a precoder 36, which represents the non-linear precoding component 20 of Figure 2, but in some embodiments of the present invention, the precoder 36 shall also include the transform component 21, as described in more detail below. The precoder 36 receives the sources signal and converts into a format for transmission. The basis of the operation of the precoder 36 is described below.

In communications, it is generally desirable to reduce the energy of a transmitted signal, and to do so in a way which does not compromise the ability of the receiver to detect a signal. This is conventionally achieved by "perturbing" the signal via a data-dependent "auxiliary vector", $\underline{A}$ having real integer components ($A_1$, $A_2$, ..., $A_M$), in which a weighted quantity of this auxiliary vector is added to the source signal $\underline{S}$ in a precoding process. The weighting is determined by a non-zero scalar coefficient, $\alpha$, which depends on the modulation scheme of signal $\underline{S}$. For example, where a source signal contains a set of waveforms defined by a quadrature amplitude modulation (QAM) scheme, 64QAM signals may be precoded differently from 128QAM signals.

The result of the precoding operation is that precoded signal $\underline{X} = \underline{S} + \alpha\underline{A}$, and the energy of the transmission, $\|\underline{Z}\|^2 = \|\mathbf{H}^{-1}\underline{X}\|^2 = \|\mathbf{H}^{-1}(\underline{S} + \alpha\underline{A})\|^2$. Through appropriate configuration of the vector $\alpha\underline{A}$, the transmission signal can be arranged such that it has a lower energy component than a signal which has not been precoded, in other words, $\|\mathbf{H}^{-1}(\underline{S} + \alpha\underline{A})\|^2 < \|\mathbf{H}^{-1}\underline{S}\|^2$.

The receiver must be configured so that the effect of the perturbation of $\alpha\underline{A}$ can be determined and corrected, in order to avoid errors in the detected signal. Since $\underline{A}$ is dependent on the source signal which is of course unknown to the receiver in advance, which is why the precoding is "non-linear", the receiver is informed of the precoding coefficient

$\alpha$, defined in accordance with a modulation type. For example, the receiver can be designed to expect a signal containing waveforms according to a particular QAM alphabet, for example, and given a predetermined relationship between the alphabet type and $\alpha$, $\alpha$ can be selected accordingly. In an embodiment of the present invention, $\alpha$ can be selected using a look-up table.

Provided $\alpha$ is suitably selected, and auxiliary vector $\underline{A}$ is suitably configured, it is possible for the receiver to eliminate the $\alpha\underline{A}$ term from the received signals by signal processing, so that the source signal $\underline{S}$ can be recovered, but where the energy of transmission has been reduced as much as possible. By reducing energy in the signal transmission, capacity of the transmission link is increased. The detailed setup of $\alpha$, as well as the way of equalising $\alpha$ at the receiver, is described in "A vector perturbation technique for near-capacity multiantenna multiuser communication - Part II: perturbation," IEEE Trans. Commun., vol. 53, pp. 537 - 544, vol. 53, March 2005, by B. H. Hochwald, C. B. Peel, and A. L. Swindlehurst.

Auxiliary vector $\underline{A}$ is configured by solving the integer least-square problem represented by expression (1) below:

$$\min_{\mathbf{A}} \left\| \mathbf{H}^{-1}(\underline{\mathbf{S}} + a\underline{\mathbf{A}}) \right\|^2 \qquad \text{Expression (1)}$$

Expression (1) describes the selection of $\underline{A}$ which minimises the norm of the vector sum of $\mathbf{H}^{-1}(\underline{S}+\alpha\underline{A})$, namely the selection of $\underline{A}$ which minimises the energy of the signal transmission. Expression (1) is solved by a non-linear optimisation component within the precoder, which outputs terms $(\alpha A_1, \alpha A_2, ..., \alpha A_M)$ for addition to $(S_1, S_2, ..., S_M)$ to give $(X_1, X_2, ..., X_M)$.

Conventionally, the above integer least-square problem is solved by searching each component of $\underline{A}$ over a sufficiently large set of finite alphabets. Assuming the size of the finite-alphabet set to be $K$, the searching complexity is $K^M$ where the source signal $\underline{S}$ has $M$ components. Usually $K$ is as large as 100, and $M$ could be as large as 64, 128, and even 1024. In these cases, $K^M$ is effectively almost infinite from the perspective of the precoder, and thus the conventional approaches do not work at all.

**First embodiment**

A first embodiment of the present invention solves expression (1) by adopting two novel approaches referred to as "feature extraction" and "vector balancing".

The principle of feature extraction is based on the finding of the inventors that the value of $\|\mathbf{H}^{-1}(\underline{S}+\alpha\underline{A})\|^2$ is dominated by the effect of first $L$ singular values of $\mathbf{H}$. In one embodiment to be described below, the ratio $L/M$ can be as small as 2-3%, where the $L$ singular values of $\mathbf{H}$ provide 99% of the total energy of $\|\mathbf{H}^{-1}(\underline{S}+\alpha\underline{A})\|^2$. It will be appreciated that the specific values of $L$ which are to be selected, and the energy threshold required to reflect "dominance" of the total energy of $\|\mathbf{H}^{-1}(\underline{S}+\alpha\underline{A})\|^2$, can be selected in accordance with the receiver's requirements, and will be described in more detail below.

As a result, in the first embodiment of the present invention, the optimisation problem in expression (1) can be reduced to the problem of minimising the impact of the first $L$ singular values through configuration of $\underline{A}$. This can largely reduce the computational complexity by around 98% without influencing the performance of non-linear precoding, i.e. while maintaining energy reduction effects and ensuring signal detection rates. The feature extraction process of the invention relates to determining which of the first $L$ singular values is associated with the largest energy reduction when an auxiliary vector is applied to a source signal.

According to singular value decomposition (SVD), matrix $\mathbf{H}$ can be written as a product $\mathbf{U}\Lambda\mathbf{V}^H$, where $\mathbf{U}$ and $\mathbf{V}$ are unitary matrices, $\mathbf{V}^H$ is the Hermitian conjugate (or conjugate transpose) of $\mathbf{V}$, and $\Lambda$ is a diagonal matrix containing the $M$ singular values of $\mathbf{H}$. The singular values reduce in magnitude along the diagonal, from the component $\Lambda_{11}$ to $\Lambda_{MM}$. A unitary matrix is one in which the product $\mathbf{V}\mathbf{V}^H$ is equal to the identity matrix $\mathbf{I}$. For a unitary matrix $\mathbf{V}$ of size $M$-by-$M$, $\mathbf{V}$ defines $M$ orthogonal eigenspaces or "subspaces" by means of row vectors $\underline{v}_i$ for $i = 1, 2,..., M$. The vectors are referred to as "right-singular vectors".

Since $\mathbf{U}$ and $\mathbf{V}$ are unitary matrices, they do not represent transmission energy terms. In geometrical terms where $\mathbf{H}$ is a transformation matrix, the matrices $\mathbf{U}$ and $\mathbf{V}$ can be seen as rotation matrices, which preserve the magnitude of the component being rotated, with the energy term being provided by a scaling matrix $\Lambda$ applied between the two rotations.

A receiver, assumed to have knowledge of the channel matrix $\mathbf{H}$, can therefore equalise the effect of matrix $\mathbf{U}$ on transmission by multiplying the received signal by $\mathbf{U}^{-1}$ on reception of a signal, since $\mathbf{U}$ is the final matrix transformation applied to $\underline{Z}$ in the product $\mathbf{U}\Lambda\mathbf{V}^H\underline{Z}$ which is received at the receiver. The effect of $\mathbf{V}$ cannot be equalised until the effect of $\Lambda$ is removed, but since $\Lambda$ is required in the minimisation problem described below, matrix $\mathbf{V}$ also remains in the minimisation problem

Applying SVD to **H** in expression (1) leads to a re-expression of the optimisation problem, as set out in expression (2) below, assuming prior equalisation of **U**:

$$\min_{\mathbf{A}}\|\Lambda\mathbf{V}(\underline{\mathbf{S}} + a\underline{\mathbf{A}})\|^2 \qquad \text{Expression (2)}$$

Considering **V** as a series of $M$ row vectors $\underline{\mathbf{v}}_i$ (where $1 \leq i \leq M$) and $\Lambda$ as containing a series of eigenvalues $(\lambda_1, \lambda_2, ..., \lambda_M)$ gives a minimisation problem as set out in expression (3), in which the impact of the $l^{th}$ singular value $\lambda_l$ on the transmission energy can be managed by:

$$\min_{\mathbf{A}}\left|\lambda_l\underline{\mathbf{v}}_l(\underline{\mathbf{S}} + a\underline{\mathbf{A}})\right|^2 \qquad \text{Expression (3)}$$

Expression (3) is a minimisation operation performed with respect to the magnitude of a scalar quantity, in contrast to expression (2) which refers to minimisation performed with respect to the norm of a vector.

According to the first embodiment of the present invention, expression (3) is solved as follows.

Without loss of generality, $\underline{A}$ is first set to be the zero vector $\underline{A} = 0$ in an initialization step. In this case, the complex value $c_l = \lambda_l\underline{\mathbf{v}}_l\underline{\mathbf{S}}$ represents the transmission energy of the signal which is attributed to the $l^{th}$ singular value of **H**. The description below explains how a selection is made as to the value of $l$ on which subsequent calculations are based, where $1 \leq l \leq L$, and where $1 \leq L < M$.

Vector $\underline{\mathbf{v}}_l$ has components $\mathbf{v}_l = [v_l^1, v_l^2, ..., v_l^M]$ where $v_l^m$, for $1 \leq m \leq M$, is a complex term. It is straightforward to find a first complex value $v_l^{m_1}$, which has the minimum angle with respect to complex value $c_l$ when expressed in the complex plane. The magnitude of the angle difference between $v_l^{m_1}$ and $c_l$ is expressed by the notation $\left|\angle(c_l^* v_l^{m_1})\right|$. (The conjugate term introduces the minus sign required to determine the angle difference from $c_l$). It is also straightforward to find a second complex value $v_l^{m_2}$ which has the maximum angle $\left|\angle(c_l^* v_l^{m_2})\right|$ with respect to complex value $c_l$. The angles referred to above are measured in either a clockwise or anticlockwise sense, whichever is associated with the smallest magnitude. Thus $-180 \leq \left|\angle(c_l^* v_l^{m_1})\right| \leq +180°$.

The amplitudes of $v_l^{m_1}$ and $v_l^{m_2}$ are then scaled by applying corresponding integers $A_{m_1}$ and $A_{m_2}$ and varying these integers such that expression (3) (and consequently, expression (2)) is minimised. The variation of $A_{m_1}$ and $A_{m_2}$ is referred to herein as "vector balancing". This scaling process therefore represents the minimisation process of expression (2) or (3), namely identifying the values of two integer components of vector $\underline{A}$ ($A_{m_1}$ and $A_{m_2}$) associated with the components $v_l^{m_1}$ and $v_l^{m_2}$ of $\underline{\mathbf{v}}_l$ such that $\lambda_l\underline{\mathbf{v}}_l(\underline{\mathbf{S}} + \alpha\underline{A})$ is minimised, for the $l^{th}$ singular value of **H** and the $l^{th}$ row vector of **V**. Effectively, $\underline{A}$ is configured through this vector balancing process such that the term $(\underline{\mathbf{S}} + \alpha\underline{A})$ is as orthogonal as possible to the vector $\underline{\mathbf{v}}_l$, thus minimising the dot product between the two vectors, and thus the energy term $\|\mathbf{H}^{-1}(\underline{\mathbf{S}} + \alpha\underline{A})\|^2$.

Since, in this step, only two components of $\underline{A}$ are optimised, computational complexity varies according to $K$, which is much simpler than the $K^M$ complexity discussed above which would be required to optimise all $M$ components of $\underline{A}$.

Although in the embodiments described above, the components of $\underline{A}$ are described as integers in the real domain, it is also possible, in modifications of the present invention, for some or all of the components of $\underline{A}$ to be complex, with components of the form $(A_1+jB_1, A_2+jB_2, ..., A_M+jB_M)$ for complex variable $j$, and integers $A$ and $B$. The same optimisation principles apply to a complex auxiliary vector as described above.

It is possible to reduce complexity yet further by identifying only a first complex value $v_l^{m_1}$ which is closest to $c_l$, rather than two values, although there will be a performance penalty in terms of reducing the effectiveness of the optimisation. Conversely, it is possible to increase the number of complex values which are identified to greater than two, which improves performance, at the expense of complexity. The selection of the components of $\underline{A}$ to be optimised is thus a trade-off, and it has been found that the best performance-scalability trade-off is achieved when two of the $M$ components are optimised.

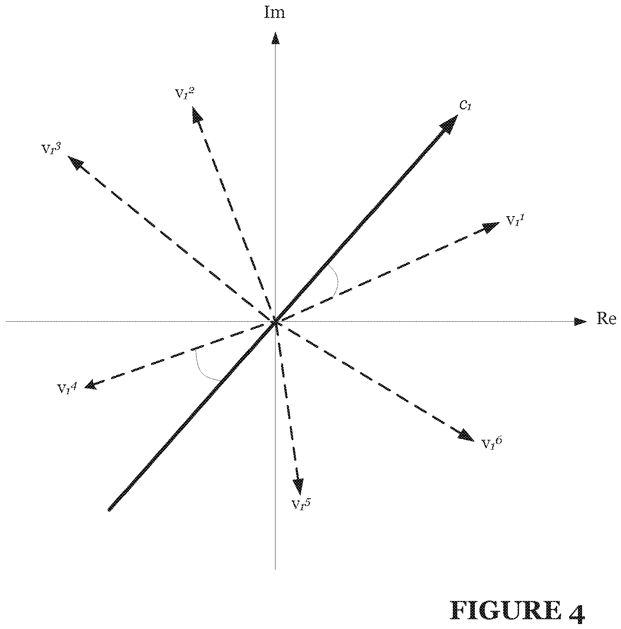

The vector balancing process is illustrated in Figure 4. Consider the first of the right-singular vectors of **H**, $\underline{\mathbf{v}}_1$. Initialising $\underline{A} = 0$, gives a complex value of $\lambda_1\underline{\mathbf{v}}_1\underline{\mathbf{S}}$ representing the energy component of the transmission signal associated with the first singular value $\lambda_l$. Figure 4 shows the complex plane, with real (Re) and imaginary (Im) axes, and the complex

value $c_1$ is shown in the first quadrant in an anticlockwise sense about the origin, as a solid line extending from the origin. The solid line has been extended through the origin so as to show a continuation of its radial direction in the third quadrant, in other words a line is extrapolated in the complex plane having an argument of $|\angle(c_1)|$ and $(|\angle(c_1)|+180°)$.

The components of $\underline{\mathbf{v}}_1$ are also shown. In the case where $M = 6$, simply for illustrative purposes, six complex values $v_1^1...v_1^6$ are also shown in dotted lines. It can be seen from Figure 4 that $v_1^1$ and $v_1^4$ are the two complex values which are closes to the solid line, and these are the two components which are selected for vector balancing. In other words, the optimised vector $\underline{\boldsymbol{A}}$ will have zero components except for the first and the fourth components, and these two components are optimised so as to mimimise the energy of the precoded signal.

Since the process above is performed only in respect of $L$ singular values of $\mathbf{H}$, the optimisation is yet more efficient than conventional approaches.

By selecting complex values which are closest to and furthest from a complex vector representing the transmission energy of the signal which is attributed to the $l^{th}$ singular value of $\mathbf{H}$, it becomes possible to determine those components of an auxiliary vector which have the most significant effect on reducing the energy of the signal transmission.

The complex values $v_l^{m_1}$ and $v_l^{m_2}$ which are the closest and furthest from $c_l$ are the two values which have the most significant components resolved into to the radial direction of $c_l$ in the complex plane, regardless of whether the values extend from the origin in the same direction or the opposite direction from $c_l$. Consequently the products $v_l^{m_1} \times \alpha A_{m_1}$ and $v_l^{m_2} \times \alpha A_{m_2}$ are configured so that when summed and added to $c_l = \lambda_l \underline{\mathbf{v}}_l \underline{\boldsymbol{S}}$, they will have the greatest subtractive effect from the energy of the signal in the direction as $\lambda_l \underline{\mathbf{v}}_l \underline{\boldsymbol{S}}$, and so the choice of coefficients is optimised.

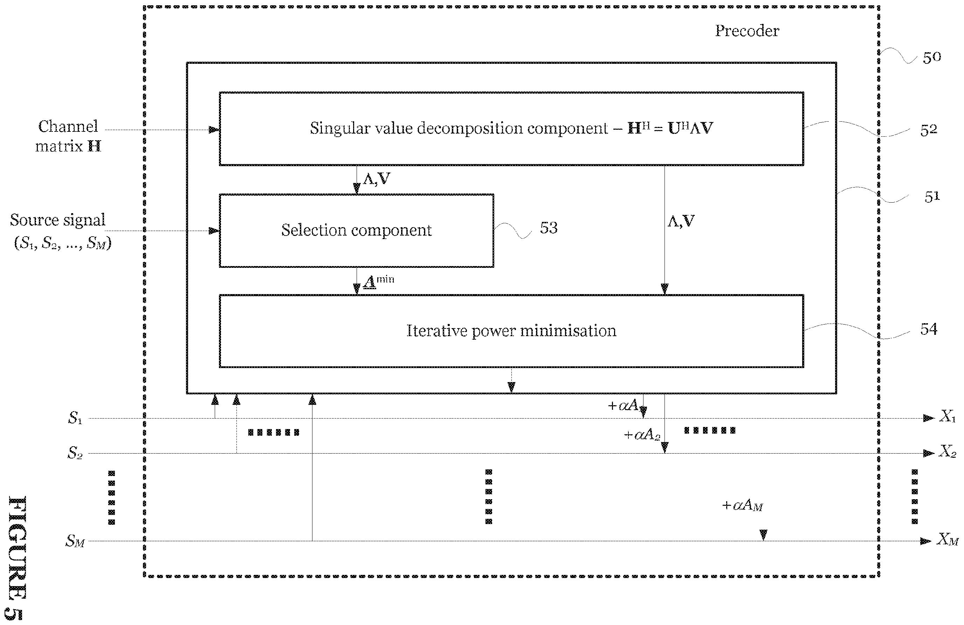

Figure 5 shows a block diagram of a precoder 50 according to the first embodiment of the present invention. The precoder 50 corresponds to precoder 36 contained in the signal transmitter 30 shown in Figure 3. The precoder 50 receives a source signal $\underline{\boldsymbol{S}}$, and outputs a precoded signal $\underline{\boldsymbol{X}}$, and contains a non-linear optimisation component 51 for applying a signal perturbation to one or more components of $\underline{\boldsymbol{S}}$. In some embodiments, the precoder 50 may also contain the transform component 21 of Figure 2, but in other embodiments, the transform component maybe part of the modulation component 33 of the transmitter 30. In the embodiment of Figure 5, the transform component is not shown.

The optimisation component 51 contains a singular value decomposition component, to derive diagonal matrix $\Lambda$ and the unitary matrix $\mathbf{V}$ from channel matrix $\mathbf{H}$, as described above. The optimisation component 51 also contains a selection component 53 which operates to determine which of the first $L$ singular values of $\mathbf{H}$ is the dominant factor in the energy quantity $\|\mathbf{H}^{-1}(\underline{\boldsymbol{S}}+\alpha\boldsymbol{A})\|^2$. The selection component 53 thus performs two processes: the first is to determine a subset of $L$ singular values from which selection is to be performed, and the second is to determine which singular value of the $L$ singular values is the dominant component.

The first process may be preconfigured, in other words, the size of $L$ may be predetermined. This may be appropriate where the transmitter 30 is configured to transmit signals having a fixed number of components, as could be the case in a MIMO system having $M$ transmitters and $M$ receivers. Where $M$ is thus known, and the channel characteristics are known, the percentage of energy associated with $L$ singular values of $\mathbf{H}$ may thus be hardwired into the transmitter and the receiver. Where the transmitter is intended to be more flexible, namely to be suitable for operation in different MIMO systems of different sizes, or to use different numbers of transmit antennas, it may be necessary to derive $L$ from look-up tables in the transmitter and the receiver for certain values of $M$.

In other embodiments, the required "dominance" effect of the $L$ components may also be variable. For example, it may be determined that $L$ components are selected which contribute to 99% of the transmission signal energy, but in other systems, it may be deduced that a dominance of only 90% is sufficient. The energy threshold may be selected depending on a number of factors including the signal modulation type, transmission rate, the size of the MIMO array, the channel matrix, the computational power resources available, including power supply, processing speed, memory, signal to noise ratio in the transmitted signal, required bit error rate limit at the receiver, and so on.

Where the effect of $L$ components on signal energy is not known from a look-up table, for example, the continuation of the $L$ components can be assessed via mathematical analysis performed as a preliminary option by the signal selection component 53, using the results of the SVD process, and through assessing each of the singular values.

In practical terms, it has been found that setting $L = 3$ provides optimal results, balancing performance with computational requirements, for a large number of transmitter-receiver configurations. This would of course apply only if the signal transmitter had more than three transmitters.

The optimisation component 51 may also contain an iterative power minimisation component 54. The power minimisation component 54 receives terms $\Lambda$ and $\mathbf{V}$ from the singular value decomposition component 52, the selection of a singular value of $\Lambda$, and the source signals $(S_1, S_2, ..., S_M)$. The role of the power minimisation component 54 is to solve expression (2) in an iterative manner, as described below in more detail.

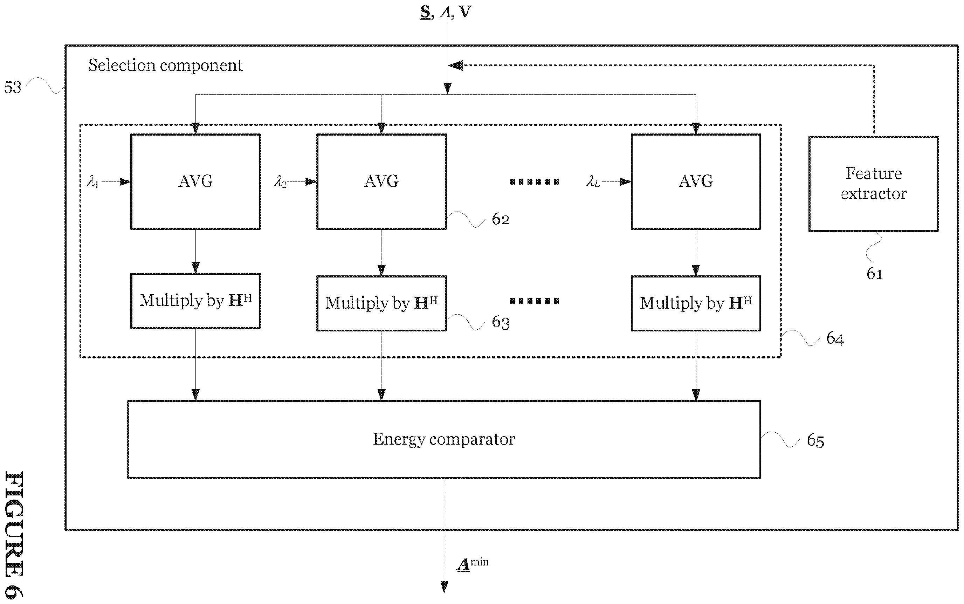

Figure 6 illustrates the selection component 53 in more detail. The selection component contains a feature extractor 61 which selects the size of parameter $L$, as described above. The feature extractor 61 may thus comprise a look-up table, or additional and/or a processing component to determine $L$. The selection component 53 also contains a number of parallel modules referred to as auxiliary variable generators (AVG) 62. The purpose of the auxiliary variable generation module is to solve expression (3) for the first $L$ singular values of $\mathbf{H}$, in parallel. In one embodiment, there may be $L$ individual AVG processors, but the embodiment may be configured to have more than $L$ processors, with some processors enabling redundancy in the event of failure of any particular component. Since $L$ may vary for different applications of the same transmitter of the invention, the transmitter would typically be designed to have sufficient AVG modules to be able to handle the largest expected value of $L$.

Expression (3) is solved by optimizing two components of $\boldsymbol{A}$ for a given one ($l$) of the $L$ singular values of $\mathbf{H}$, as described above, although more than two components of $\boldsymbol{A}$ may be optimised if need be, as described above. Two components of $\boldsymbol{A}$ are selected which minimise the modulus of the sum $\lambda_l \underline{\mathbf{v}}_l (\boldsymbol{S} + \alpha \boldsymbol{A})$. Consequently, the first AVG optimises $\boldsymbol{A}$ to minimise the modulus of $\lambda_1 \underline{\mathbf{v}}_1 (\boldsymbol{S} + \alpha \boldsymbol{A})$, the second AVG optimises $\boldsymbol{A}$ to minimise the modulus of $\lambda_2 \underline{\mathbf{v}}_2 (\boldsymbol{S} + \alpha \boldsymbol{A})$ and so on.

Having produced $L$ optimised auxiliary vectors $\boldsymbol{A}^l$ in this manner, each auxiliary vector generated by each AVG 62 is then added to the source signal and, multiplied by the predetermined coefficient $\alpha$, as described above. The resultant output of the $l^{th}$ AVG is a precoded vector $\boldsymbol{X}^l$ containing a set precoded signal components $(X_1^l, X_2^l, ... X_M^l)$, for $1 \le l \le L$, which corresponds to the addition of a weighted auxiliary vector to the source signal, as described above. For each AVG 62, $\alpha$ is the same, but since the auxiliary vector differs, the precoded signals also differ.

The precoded signals are then multiplied by matrix $\mathbf{H}^{-1}$ for energy evaluation of the vector $\mathbf{H}^{-1}(\boldsymbol{S} + \alpha \boldsymbol{A})$, i.e. calculation of energy terms $\|\mathbf{H}^{-1}(\boldsymbol{S} + \alpha \boldsymbol{A})\|^2$. The multiplication can be performed by a single multiplication module, carrying out $L$ multiplication operations in series or in parallel, or by $L$ individual multiplication modules 63. The multiplication modules and the AVG modules 62 are collectively referred to herein as a balancer 64, "balancing component", or "balancing module".

The $L$ energy terms are then compared by an energy comparator 65, and the singular value $\lambda_{min}$ associated with the minimum energy is identified. The singular value is therefore the component of $\mathbf{H}$ which is not in isolation the component having the largest energy contribution of $\mathbf{H}$, but is instead the component of the $L$ dominant components which is associated with the least amount of energy once an auxiliary vector is added to the source signal. Since the auxiliary vector is dependent on the signal, the identified singular value is also signal-dependent. A signal $\boldsymbol{A}^{lmin}$ is output from selection component as the auxiliary vector having the minimum energy, and associated with $\lambda = \lambda_{min}$, as also illustrated in Figure 5.

The $l^{th}$ AVG associated with the singular value vector corresponding to the minimum energy is selected for use in iterative power minimisation, which can further enhance the performance of the present invention, as described in more detail below.

The purpose of iterative power minimisation is to refine the selection of $\boldsymbol{A}$ such that the energy of signal transmission is further reduced. Instead of starting with $\boldsymbol{A} = 0$, and selecting two components of $\boldsymbol{A}$ which minimise the sum $\lambda_l \underline{\mathbf{v}}_l (\boldsymbol{S} + \alpha \boldsymbol{A})$, the iterative process uses a first auxiliary vector estimate $\boldsymbol{A}^{(1)}$, in conjunction with a particular singular value $\lambda_1$, to determine a second auxiliary vector $\boldsymbol{A}^{(2)}$ which, when added to $\boldsymbol{A}^{(1)}$ minimises the signal energy associated with a second singular value $\lambda_2$, and determines whether the newly minimised energy has reduced from the initial estimate by a predetermined amount. If the energy has reduced sufficiently, a third estimate $\boldsymbol{A}^{(3)}$ is calculated in a similar manner, using $\boldsymbol{A}^{(1)}$, $\boldsymbol{A}^{(2)}$ and $\lambda_3$. The process continues until it is not possible to reduce the energy further through refinement of $\boldsymbol{A}$, or all of the $L$ singular values have been processed. The result of the iteration is therefore a further optimised value of $\boldsymbol{A}$.

In more detail, the iteration means that instead of only identifying the components of $\boldsymbol{A}$ that minimise $\lambda_1 \underline{\mathbf{v}}_1 (\boldsymbol{S} + \alpha \boldsymbol{A})$, for example, components of $\boldsymbol{A}$ that minimise $\lambda_2 \underline{\mathbf{v}}_2 (\boldsymbol{S} + \alpha (\boldsymbol{A} + \boldsymbol{A}^{(1)}))$, are also identified i.e. instead of picking $c_1 = \lambda_1 \underline{\mathbf{v}}_1 \boldsymbol{S}$ as the reference vector in the vector balancing process, for example, $c_2 = \lambda_2 \underline{\mathbf{v}}_2 (\boldsymbol{S} + \boldsymbol{A}^{(1)})$ is picked.

If the singular value identified by the selection component is $\lambda_3$, for example, and $L = 3$, the iteration can be set so that it "restarts" with the next singular value for consideration being $\lambda_1$ and then $\lambda_2$, which ensures that there is a possibility to reduce energy through consideration of all singular values, rather than terminating the procedure at the third singular value.

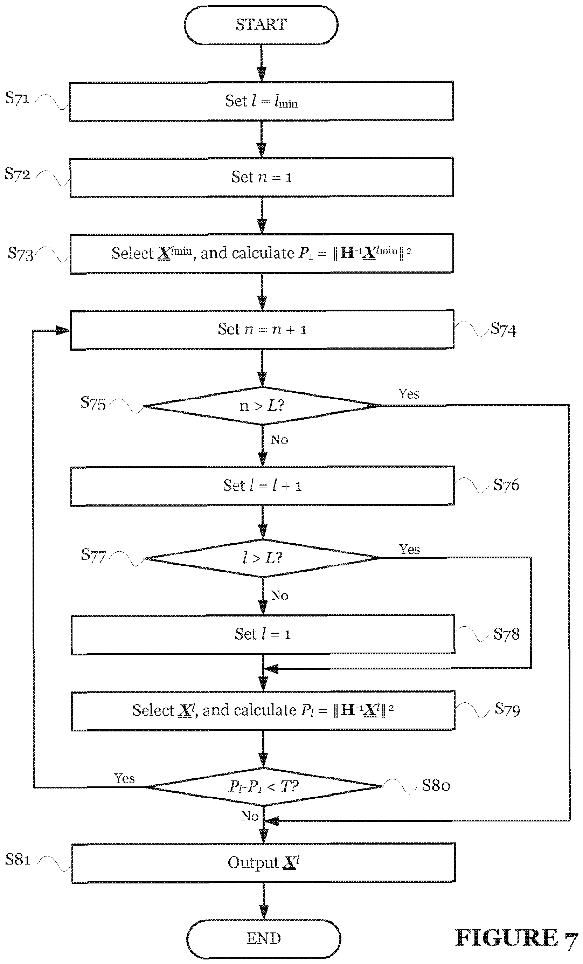

A logical flow chart of the iteration, as performed by the power minimisation component 54, is illustrated in Figure 7. The first step S71 is to set $l = l_{min}$, where $l_{min}$ is the singular value associated with the minimum energy as identified by the selection component 53. An iteration cycle counter $n$ is set at $n = 1$ in step S72. In step S73, An AVG 62 from the selection component 53 associated with $\lambda_{lmin}$ provides a signal $\boldsymbol{X}^{lmin}$ which is precoded using an auxiliary vector $\boldsymbol{A}^1$ optimised for $\lambda_{lmin}$ as described above. The signal is multiplied by $\mathbf{H}^H$ and the energy is calculated as $P_1$, based on $\|\mathbf{H}^{-1} \boldsymbol{X}^{lmin}\|^2$. Steps S71, S72 and S73 thus represent initialisation of the iteration.

Next, in step S74, $n$ is incremented, by setting $n = n+1$. In step S75, a test is performed as to whether $n > L$. If $n > L$, the iteration is terminated and $\boldsymbol{X}^l = \boldsymbol{X}^{lmin}$ is output as the precoded signal in step S81. Otherwise the process continues to step S76, where the singular value index $l$ is incremented as $l = l+1$. In step S77, a test is performed as to whether $l > L$. If $l > L$, $l$ is set as $l = 1$ in step S78. Otherwise, the process continues to step S79. In step S79, an AVG 62 from the selection component 53 associated with the new value of $\lambda_l$ provides a signal $\underline{X}^l$ which is based on precoding the sum of the source signal and the auxiliary vector $\underline{A}^1$ optimised from the previous iteration cycle, with a new auxiliary vector $\underline{A}^n$ optimised for $\lambda_l$. The signal is multiplied by $\mathbf{H}^H$ and the energy $P_l$ is calculated. In step S80, the energy is compared with energy $P_1$ previously determined. If $P_l - P_1$ is less than a pre-defined threshold, $T$, the iteration continues in an attempt to further reduce the energy, by returning to step $S_{74}$ and increasing the cycle counter $n$. If is $P_l - P_1$ is greater than a threshold, it is determined that the auxiliary vector has been suitably optimised and $\underline{X}^l$ is output as the final precoded signal in step S81, although it will be appreciated that given that $\underline{X}^l$ has already been multiplied by $\mathbf{H}^H$ prior to energy determination, the output can instead be $\underline{Z}^l = \mathbf{H}^H \underline{X}^l$.

The threshold $T$ is set according to the level of refinement which is to be performed, as required by a receiver. If $T$ is large, a high level of refinement is required, i.e. the iteration continues until a large amount of energy reduction has been achieved. In some cases, this threshold may not be reached, and the iteration is limited by the number of cycles.

It is not essential to perform iterative power minimisation, however. In one embodiment, having identified an AVG associated with minimum energy, the auxiliary vector can be output having only the components of $\underline{A}$ which are optimised for the $l^{th}$ singular value. The auxiliary vector may thus have components of value zero, other than $A_{m1}$ and $A_{m2}$, which are non-zero integers. This auxiliary vector is added to the source signal in the precoding portion of the transmitter, and the resultant signal is then multiplied by $\mathbf{H}^H$. Although two components are described in this example, a decision maybe taken to use three or more values of $\underline{A}$, depending on resources available, required transmission rates and the nature of a particular channel matrix or modulation scheme of the source signal $\underline{S}$. Finally, the precoded signal is transmitted for detection.

The embodiments described above demonstrate can demonstrate the following advantages over conventional transmission systems employing precoding using auxiliary vectors.

(1) Firstly, computational efficiency is improved by restricting calculations to consideration of only a subset $L$ of the $M$ singular values of the channel matrix. The benefit is significant is $L/M$ is as low as 2% for example, although the percentage can be made even lower than 1% where a low "dominance" effect is acceptable.

(2) Secondly, computational efficiency is further improved by restricting optimisation of the auxiliary vector to optimisation of as few as two of the $M$ components of the vector in the vector balancing process described above. Here, computational complexity is of the order of $K$ instead of $K^M$, for a symbol alphabet in the transmission signal of size $K$, which is a significant improvement in the case of MIMO systems employing a massive number of components.

(3) Thirdly, energy efficiency in signal transmission can be improved by further refining the optimisation of the auxiliary vector, and the level of further refinement can be set in a way which does not compromise computational complexity.

It will be appreciated following the description above that a given embodiment does not need to demonstrate all three of the benefits above, since the second and third embodiments can be included as additional modifications to a system which performs optimisation using a limited number of singular values of the channel matrix.

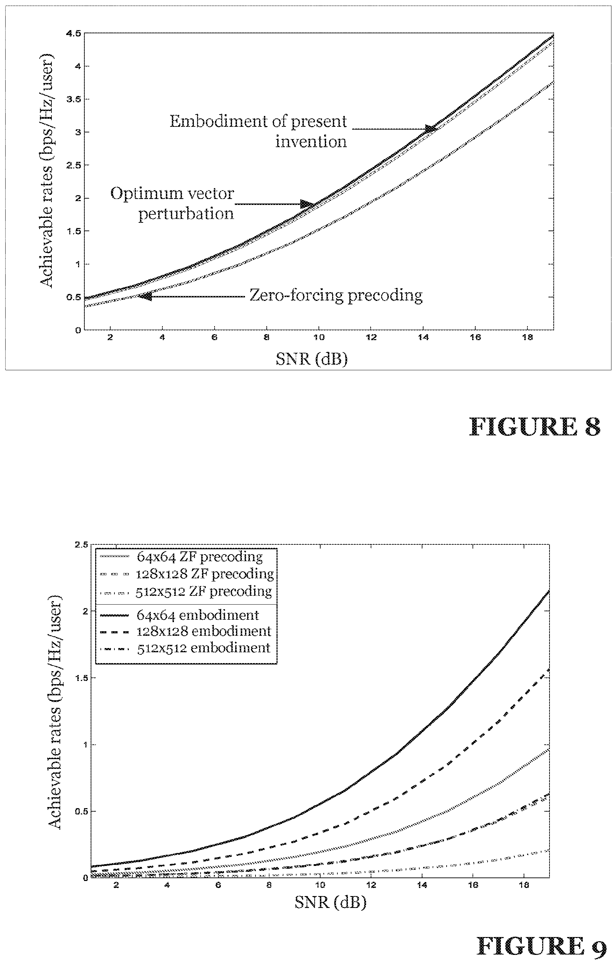

Figure 8 illustrates a simulation of achievable data rates, expressed as bits per second / Hz / user, possible using 4x4 non-linear MIMO precoding according to an embodiment of the present invention, namely a transmitter employed in a MIMO system which has four transmitters for transmission of signal components for four users to four receivers over a Rayleigh channel. The achievable data rates are expressed in terms of the achievable detection rate at a receiver which is configured to receive the transmitted signal, as a function of the signal to noise ratio (SNR) of the signal transmission. Achievable detection rates are those at which the bit error rate (BER) of signal detection can be guaranteed, i.e. where BER is controllable (and errors are correctable), for an ideal receiver.

The results are compared with those obtained from conventional zero-forcing (ZF) algorithms, which involves simply applying the pseudo-inverse of the channel matrix to the sources signal prior to transmission, i.e. only linear precoding is used. The zero-forcing algorithm demonstrates poorer performance than the present invention as represented by the lower data rates achievable for a given SNR, and this is a consequence of the higher transmission energy which arises in the absence of non-linear precoding, which reduces the capacity of the channel link. As the size of the MIMO array increases from 4x4 to massive arrays of 32x32 and above, the discrepancy between the present invention and ZF techniques grows larger due to the increasing disadvantage of the absence of non-linear precoding, as described below.

The results of Figure 8 are also compared with those from an optimum perturbation configuration, in which all $M$ components of the auxiliary vector are optimised, taking into account all $M$ singular values of the channel matrix. This configuration is "optimum" in the sense that transmission energy is reduced as much as is possible, although at the expense of computational complexity. The performance level of the invention is comparable with the optimum configuration, with only a small discrepancy, and when the substantial increase in computational complexity required to achieve the optimum configuration is considered, it can be seen that the arrangement of the present invention offers a far superior balance between use of resources and performance.

In terms of resources, the present invention is scalable since the restriction on the number of singular values, and potentially the components of the auxiliary vector to be optimised can be configured such that there is little, or even no change as the size of the array increases. For example, $L = 3$ could be adopted as configuration for any of 64x64, 128x128 or 512x512 systems, which means that the computational complexities remain of the same order of magnitude.

Figure 9 illustrates a comparison of the data rates achievable with a massive MIMO configuration of embodiments of the present invention using a 64x64 array, a 128x128 array and a 512x512 array (dark lines), and the use of ZF precoding in conventional arrangements (grey lines) of the same size. Here it is clear that the results of the present invention are far superior to those of the prior art, and the 512x512 system according to an embodiment of the present invention is comparable to the 128x128 system using ZF precoding.

At a SNR of over 18dB, for example, with 64x64 systems, the achievable rate is three times greater with the precoding of the present invention than with a conventional system. Similarly, at a given data rate of 1Hz per user, the SNR performance is 6dB greater (12dB vs 18dB) with the present invention, in other words, the same data rate can be achieved with significantly more noise in the channel, due to the increased channel capacity achieved through lowering energy of signal transmission. The effects of increased channel capacity can be seen through enabling greater use of multipath transmission, for example, which enables a receiver to take greater advantage of signal interference multiple paths. In other words a noisy waveform received over one signal path may also be received as a cleaner waveform via another signal path, so that the same signal can be detected more effectively at the receiver.

**Second embodiment**

A second embodiment of the present invention is described below which enables further accuracy in the solution of the process of minimising Expression (1), with only a small amount of additional computational complexity. The description of the second embodiment is in the context of the precoder 36 of Figure 3, the difference between the second and first embodiments residing in the way in which the precoding is carried out. As such, the second embodiment is applicable to the architecture of Figures 1 and 2 in the same way as the first embodiment.

Whereas the first embodiment is based on the finding that the value of $\|\mathbf{H}^{-1}(\underline{S}+\alpha\underline{A})\|^2$ in expression (1) to be minimised is dominated by the effect of the first $L$ singular values of $\mathbf{H}$, the second embodiment does not rely on this finding, and instead performs an exhaustive search for a subset of the components of $\underline{A}$ which enable minimisation of expression (1), taking into account the full channel matrix $\mathbf{H}$. This embodiment therefore does not require the preliminary processing of the first embodiment in which singular value decomposition of $\mathbf{H}$ is performed to lead to the minimisation problem expressed in expression (3) for a particular eigenvalue $\lambda_l$ of $\mathbf{H}$ and row vector $\underline{v}_l$.

In its simplest form, the second embodiment of the present invention finds an optimum pair of components of $\underline{A}$ via an exhaustive search. Where $\underline{A}$ has $M$ components, the number of combinations of pairs of values of $\underline{A}$ is $M(M-1)/2$, and the optimisation problem involves the selection of one of these combinations. It can be shown that an exhaustive search of the optimum pair of values of $\underline{A}$ can be considered as a "convex" optimisation problem, which is represented by the minimisation of a two-variable quadratic function of the form $f(x, y) = ax^2 + by^2 + cxy + d$. The mathematical proof for such a representation of the optimisation problem is included in *Appendix A* and *Appendix B*, the teaching of which is incorporated herein. *Appendix A* provides the preliminary mathematics defining low-complexity MIMO non-linear precoding using degree-2 vector perturbation, within the context of which the proof of *Appendix B* is applied. The quadratic expression to be optimised is represented in expression (30) of *Appendix B*.

Minimisation of a function of this type involves minimisation with respect to both variables $x$ and $y$, which respectively represent two different components of $\underline{A}$. Convex optimisation problems are well-known in mathematics and a number of efficient techniques are available to the skilled person for the solution of this problem, once the problem has been set up based on the teaching of the present disclosure.

In practical terms, the second embodiment involves a number of optimisation processes which take place in parallel, and this is analogous to the AVGs 62 of Figure 6 which solve expression (1) for a particular pair of variables of $\underline{A}$. Consequently, $M(M-1)/2$ AVGs would be required to be able to solve expression (1) for every combination of pairs of variables of $\underline{A}$. The first AVG would perform optimisation of $f(x, y)$ based on $\underline{A}$ having non-zero components $x = A_1$ and $y = A_2$, and zero components $A_3...A_M$. The second AVG would be based on $\underline{A}$ having non-zero components $x = A_1$ ($x$) and $y = A_3$, and zero components $A_2$ and $A_4...A_M$, and so on, for each pair of components of $A$. Each AVG would provide its output to the energy comparator 65 of Figure 6 via channel matrix multipliers 63, which would select the solution of each optimisation problem and identifies the output as $\underline{A}^{\text{min}}$.

Since $\underline{A}$ has integer components (although in a modification of the second embodiment, $\underline{A}$ may have complex components), it may be that the minimisation calculations for $x$ and $y$ reveal non-integer values, in which case the closest integer value to the minimised values may be identified as the components of $\underline{A}$.

The complexity of the operation of the second embodiment is of the order of $K^2$ for a source signal symbol alphabet of size $K$. As such, the complexity is reduced compared with conventional techniques which have complexity of the order of $K^M$ where $\underline{A}$ has $M$ components. The increase in computational complexity with respect to the first embodiment from $K$ to $K^2$ is associated with an increase in performance brought about as the minimisation problem is not based on pre-selection of components of the channel matrix $\mathbf{H}$, i.e. it is based on an exhaustive search of pairs of components of $\underline{A}$. For a 4x4 MIMO array, performance of the second embodiment has been found to be the same as a ZF system. As set out above, however, the performance of the first embodiment may be improved, and thus brought closer to that of the second embodiment, through the iterative refinement process described in Figure 7.

The advantage of the second embodiment relative to the first embodiment lies in the selection of subsets of components of $\underline{A}$ in order to minimise expression (1). Consequently, it is associated with the second advantage set out above in relation to the first embodiment, in that it enables significant improvements over conventional MIMO systems involving massive numbers of components. The third advantage set out above in relation to the first embodiment is achieved in the second embodiment as a consequence of the exhaustive search, and so the iterative refinement is not required in the second embodiment. The exhaustive search represents a modification of the vector balancing approach as described in Figure 4 - rather than identifying two particular vectors which are closest to an initialised complex value solving the minimisation problem for $\underline{A}$ = 0, vector balancing is achieved via an exhaustive search of the two optimum components of $\underline{A}$.

As a result of the omission of the SVD component and the iterative component of the first embodiment from the second embodiment, the precoder of the second embodiment can be considered as a simplification of what is represented in Figure 5, requiring the source signal ($S_1$, $S_2$, ..., $S_M$) and the channel matrix $\mathbf{H}$ to be provided directly to the selection component 53, and the minimised auxiliary vector $\underline{A}^{min}$ solving expression (1) output from the non-linear optimisation component 51.

It is possible to further enhance the second embodiment through the optimisation based on three non-zero components of $\underline{A}$ (for which there are $M(M-1)(M-2)/3$ possible combinations), based on extension of the teaching above, although the computational complexity then increases to $K^3$, and so a trade-off must be made between performance and complexity. Where required, the skilled person will appreciate that numbers of components of $\underline{A}$ higher than three may also be used where required.

It will be appreciated that modifications to the embodiments described above may be made above which fall within the scope of the invention as defined by the claims, based on interchange of some or all of the described or illustrated elements, and generic principles defined herein can be applied to other embodiments. It will be particularly appreciated that the first embodiment can be understood as a special case of the second embodiment, in which the number of components of $\underline{A}$ to be optimised is restricted to two. Additionally, although the second embodiment as described above does not require preliminary SVD of channel matrix $\mathbf{H}$, it is possible, in a modified version of the second embodiment, to include the preliminary SVD of $\mathbf{H}$ as described in the first embodiment.

Moreover, where certain elements of the present invention can be partially or fully implemented using known components, only those portions of such known components that are necessary for an understanding of the present invention are described, and detailed descriptions of other portions of such known components are omitted so as not to obscure the invention. In the present invention, an embodiment showing a singular component should not preclude other embodiments including a plurality of the same component, and vice-versa, unless explicitly stated otherwise herein. Further, the present invention encompasses present and future known equivalents to the known components referred to herein by way of illustration.

The terms "component" and "module" are used interchangeably throughout the description, and may be implemented as hardware, software, or a combination of both. To this effect, the modules described above may be implemented as a computer program stored in a memory such as a ROM which controls aspects of the transmitter shown in Figure 3.

**Appendix A**

Low-Complexity MIMO Non-Linear Precoding Using Degree-2 Vector Perturbation (VP)

*Index Terms-Low* **complexity, multiple-input multiple-output (MIMO), non-linear precoding, vector perturbation.**

I. PRELIMINARY

*A. Vector Perturbation and Optimization*

The original work of VP is built upon a discrete-time baseband model, which includes an access point with $M$ transmit antennas and $N$ individual users. Each user has one receive antenna. The observed signal at the $n^{th}$ user is

$$y_n = \mathbf{h}_n^T \mathbf{x} + v_n, \ n \in [1, N], \qquad (1)$$

where $[\cdot]^T$ is the matrix transpose, $\mathbf{h}_n = [h_{n,1}, \ldots h_{n,M}]^T$ the channel vector with its $m^{th}$ element, $h_{n,m}$, denoting the channel coefficient between the $m^{th}$ transmit antenna and the $n^{th}$ receive antenna, $x = [x_1, \ldots, x_M]^T$ the transmitted signal block with its $m^{th}$ element, $x_m$, denoting the signal sent by the $m^{th}$ transmit antenna, and $v_n$ the complex Gaussian noise at the $n^{th}$ user with zero mean and variance $\sigma^2$.

It is assumed that the access point has the global channel knowledge of $h_{n,m}$, $\forall n$, $m$, which is represented by an $N \times M$ channel matrix $\mathbf{H}$. The function of VP is relating x to the original information symbols $s_n$

$$\mathbf{x} = \mathbf{H}^{\dagger}(\mathbf{s} + \alpha\boldsymbol{\omega}), \qquad (2)$$

where $[\cdot]^{\dagger}$ is the matrix pseudo inverse, $s = [s_1, \ldots, s_N]^T$, $\omega = [\omega_1, \ldots, \omega_N]^T$ with $\omega_n$ to be a complex integer, and $\alpha$ a scaling factor, which is appropriately configured corresponding to the modulation format of s. Plugging (2) into (1) yeilds

$$y_n = s_n + \alpha\omega_n + v_n. \qquad (3)$$

The user knows the modulation format of $s_n$ and thus also $\alpha$. A module receiver can be employed to remove the term $\alpha\omega_n$ from (3) by means of

$$z_n = y_n - \alpha \left\lfloor \frac{y_n + \alpha(1+j)/2}{\alpha} \right\rfloor, \qquad (4)$$

where $\lfloor \cdot \rfloor$ denotes the integer floor. After that, a signal detector can be applied on $z_n$ to reconstruct $s_n$. Then, the transmit-receive procedure is completed.

The key problem of VP is to find the optimum configuration of $\omega$ (say $\omega^*$) such that the following objective function is achieved

$$\omega^* = \arg\min_{\boldsymbol{\omega}} \frac{\|\mathbf{H}^{\dagger}(\mathbf{s} + \alpha\boldsymbol{\omega})\|^2}{E_s}, \qquad (5)$$

where $E_s$ is the received signal energy, and $\| \cdot \|$ the Frobenius norm. By this means, the optimum configuration $\omega^*$ maximizes the transmit-energy efficiency.

When $E_s$ is forced to be constant, (5) is equivalent to

$$\omega^* = \arg\min_{\boldsymbol{\omega}} \|\mathbf{H}^{\dagger}(\mathbf{s} + \alpha\boldsymbol{\omega})\|^2. \qquad (6)$$

Defining $\bar{\mathbf{s}} \triangleq \mathbf{H}^{\dagger}\mathbf{s}$ and re-defining $\boldsymbol{\omega} \triangleq -\boldsymbol{\omega}$, (6) immediately becomes

$$\omega^* = \arg\min_{\boldsymbol{\omega}} \|\bar{\mathbf{s}} - \alpha\mathbf{H}^{\dagger}\boldsymbol{\omega}\|^2. \qquad (7)$$

This objective function shows that the VP optimization is an integer least-square (ILS) problem, which has already found a few solutions such as sphere encoding, LR, and V-BLAST. None of them is however saturated in terms of the performance-complexity trade-off, and thus the D2VP technique is motivated.

It is also worthwhile to note that the difference $(\bar{s} - \alpha \mathbf{H}^{\dagger}\omega)$ comes from the integer property of $\omega$ instead of the thermal noise. Therefore, the ILS problem in (7) differs from the ILS problem in MIMO detection mainly in two folds:

- The difference $(\bar{s} - \alpha\mathbf{H}^{\dagger}\omega)$ does not follow a Gaussian process.
- The minimum of $\|\bar{s} - \alpha\mathbf{H}^{\dagger}\omega\|^2$ is not zero or $\mathbb{E}(\bar{s} - \alpha\,\mathbf{H}^{\dagger}\omega) \neq 0$.

Hence, some MIMO detection approaches such as minimum mean-square error and maximum-likelihood cannot be straightforwardly employed to resolve (7).

*B. Application Scenarios and The Scope of Focus*

It is important to elaborate several key technical issues with some new ingredients.

*1) The channel matrix* **H**: We believe that most of interesting questions would come to the channel matrix **H** regarding its availability at the transmitter side, its dimension and regularity.

Section I-A shows that the VP technique requires H to be made available at the transmitter side for the sake of channel inverse and optimization. This requirement is indeed demanding in today's wireless networks. However, it is not unrealistic as far as low-mobility time-division duplexing (TDD) networks are concerned. In Europe, wireless researchers have been working on the TDD channel reciprocity in MIMO test networks, which if successful enables the use of uplink channel estimates for downlink multiuser MIMO precoding. In pessimistic cases when the full knowledge of H is not available at the transmitter side, there have been already remarkable progress on the precoding techniques with imperfect CSIT, delayed CSIT, or limited feedback, for which the technique with full CSIT provides the upper bound of the data rate.

The number of spatial-domain degrees of freedom equals to the rank of H, which puts an up limit onto the number of orthogonal data-streams. Without loss of generality, we therefore can assume $M \geq N$ and $N = \text{Rank}(\mathbf{H})$. Moreover, future wireless networks will be super dense in nature, and they are very demanding to the highly spectral efficiency. In this case, the number of spatial-domain degrees of freedom is expected to be large in nature; moreover the spatial-domain can be fully loaded, for which linear precoding techniques are far away from the optimum. In the rest of the paper, we therefore consider the case $M = N$ for its critical position in future super dense networks.

*2) User equality in date rate:* In the general VP optimization problem, it is assumed that all the users (receivers) have the same data rate. We also recognize this as a practical assumption. For instance in UMTS networks, the data rate is often region specific; and the region is classified according to the large-scale path loss between the transmitter and receivers. In this case, users located in the same region can be applied with the VP technique, and those located in different regions are differed in frequencies.

*3) Synchronization issues:* We recognize synchronization as one of critical issues in the area of multiuser MIMO processing. The timing synchronization can be relatively easy by employing the time-domain guard interval or cyclic prefix. However, the frequency synchronization is really a concern for practical implementation. Nevertheless, there have been already a lot of ongoing research activities in the scopes of synchronization and waveform design, and thus in this paper we assume the perfect case of synchronization so that our technical presentation can be focused on the real problem of interest.

## II. DEGREE-2 VECTOR PERTURBATION

*A. Concept and Algorithm*

*Definition 1:* Analogue to all of the existing VP approaches, the objective of D2VP is also to handle the objective function (7). The major difference is that D2VP does not take the procedure of searching for $\omega^*$ in the *N*-D complex Euclidean space. Instead, it breaks down the searching process into several iterations, with each performing search only in two real subspaces, which are carefully selected.

Let us take the $i^{th}$ iteration as an example to elaborate the basic concept of D2VP. Note that, for each iteration, the terms $\bar{s}$ and $\omega^*$ will be updated, and thus they will be labelled with the index (*i*). Then, the objective function of the $i^{th}$ iteration is

$$\omega^*(i) = \arg\min_{\omega} \|\bar{s}(i-1) - \alpha \mathbf{H}^\dagger \omega\|^2, \qquad (8)$$

where $\bar{s}(0) = \bar{s}$ and

$$\bar{s}(i) = \bar{s}(i-1) - \alpha \mathbf{H}^\dagger \omega^*(i). \qquad (9)$$

As long as the iterative process completes, we can obtain

$$\mathbf{x} = \bar{\mathbf{s}}(I) \text{ and } \omega^* = \sum_{i=1}^{I} \omega^*(i), \qquad (10)$$

where $I$ is the number of iterations.

Now, there are two key issues regarding the above iterative process: 1) how D2VP works based on (8), and 2) convergence behaviour of the iterative process.

*1) How D2VP Works:* In order to clarify the concept, here we assume that $\omega$ is a real vector. Suppose there are two elements in $\omega$ (say $\omega_{n1}$, $\omega_{n2}$, $n1,n2 \in [1,N], n_1 \neq n_2$), which has been selected for the D2VP procedure. Then, $\omega$ has ($N$ - 2) unselected elements, which should be set to zero. By defining $\omega_2 \triangleq [\omega_{n_1}, \omega_{n_2}]^T$ and $\tilde{\mathbf{H}}$ an $N \times 2$ matrix formed by the $n_1{}^{th}$ and $n_2{}^{th}$ column of $\mathbf{H}^\dagger$, the objective function (8) is equivalent to

$$\omega_2^*(i) = \arg\min_{\omega_2} \|\bar{\mathbf{s}}(i-1) - \alpha\tilde{\mathbf{H}}\omega_2\|^2, \qquad (11)$$

and then $\omega^*(i)$ is obtained by using zero padding on $\omega_2^*(i)$. The vector-perturbation technique based on (11) follows the definition of D2VP, which can be solved through most of existing approaches including exhaustive search, sphere encoding, and V-BLAST. However, those approaches face the problem of searching over the infinite set of integers, and the searching complexity is in a square order. Note that the optimum solution of (11) is achieved only when all possible combinations of $(n_1, n_2)$ are visited, and such an exhaustive visit cost complexity in a square order. Therefore, the overall searching complexity is in an order of four. In Section II-B, it will be shown that (11) is a convex optimization problem, and the optimum point can be determined in a closed-form.

*2) Iterative Process and Convergence:* In general, D2VP is a sub-optimum technique due to the reduction in the number of subspaces involved in the optimization procedure. Nevertheless, the optimality of D2VP can be improved through the iterative process described by (8)-(10).

Let us consider the outcome of the $i^{th}$ iteration, i.e., $\omega^*(i)$ and $\bar{\mathbf{s}}(i)$. The vector $\omega^*(i)$ has two possible states: 1) $\omega^*(i)$ = 0, or 2) $\omega^*(i) \neq 0$. For the state of $\omega^*(i) = 0$, (9) shows that $\bar{\mathbf{s}}(i) = \bar{\mathbf{s}}(i-1)$, with which further iterations would not improve the performance, and thus the iterative process terminates. For the state of $\omega^*(i) \neq 0$, the objective function (8) assures $\|\bar{\mathbf{s}}(i)\| < \|\bar{\mathbf{s}}(i-1)\|$, which means that the performance of D2VP has been further improved. Note that each iteration aims at reaching a local optimum based on $\bar{\mathbf{s}}(i-1)$, therefore the iterative process functions as the neighbourhood search, which will quickly converge to a local optimum point.

*3) Optimality Analysis for D2VP:* Let us start from the original VP problem formulated in (2) and (7). The Frobenius norm of x is expressed by

$$\|\mathbf{x}\|^2 = \sum_{l=1}^{N} \underbrace{\left| \bar{\mathbf{s}}_l - \alpha \sum_{n=1}^{N} \tilde{\mathbf{h}}_{l,n}\omega_n \right|^2}_{\triangleq \beta_l}, \qquad (12)$$

where $\bar{\mathbf{s}}_l$ denotes the $l^{th}$ element of $\bar{\mathbf{s}}$, and $\tilde{\mathbf{h}}_{l,n}$ the $(l,n)^{th}$ element of $\mathbf{H}^\dagger$, Now, the aim is to find a set of $\{\beta_1,..., \beta_N\}$, which minimizes $\|x\|^2$.

Given two indices $n_1, n_2 \in [1, N]$, (12) can be rewritten into

$$\beta_l = \left| \bar{\mathbf{s}}_l - \alpha \sum_{n=n_1,n_2} \tilde{\mathbf{h}}_{l,n}\omega_n - \alpha \sum_{n\neq n_1,n_2} \tilde{\mathbf{h}}_{l,n}\omega_n \right|^2. \qquad (13)$$

Then, we form the relationship

$$\sum_{n\neq n_1,n_2} \tilde{\mathbf{h}}_{l,n}\omega_n = \sum_{n=n_1,n_2} \tilde{\mathbf{h}}_{l,n}\omega_n' + \varepsilon_l, \qquad (14)$$

where $\omega_n'$ is the corresponding integer, and $\varepsilon_l$ the difference between two sums in (14), of which the amplitude can be minimized by means of configuring $\omega_n'$.

Plugging (14) into (13) results in

$$\beta_l = \left| \bar{s}_l - \alpha \sum_{n \neq n_1, n_2} \tilde{h}_{l,n}(\omega_n + \omega_n') - \alpha \varepsilon_l \right|^2. \quad (15)$$

Since $(\omega_n + \omega_n')$ is still an integer, we can omit the term $\omega_n'$ and simplify (15) into

$$\beta_l = \left| \bar{s}_l - \alpha \sum_{n \neq n_1, n_2} \tilde{h}_{l,n}\omega_n - \alpha \varepsilon_l \right|^2. \quad (16)$$

The reason of having $\varepsilon_l$ in (14)-(16) is because of the constraint that $\omega_l$ is integer. We adopt the assumption that $\tilde{h}_{l,n}$, $\forall l$, $n$, is generated independently according to the standard complex Gaussian distribution. Then, the impact of the integer constraint decreases when $N$ becomes large; and we have $\varepsilon_l \to 0$ when $N \to \infty$. Hence, in the procedure of computing $\beta_l$, D2VP suffers optimality loss in the case of small MIMO, and such a loss approximates to zero in the case of large MIMO.

The other problem of causing the optimality loss is: $\beta_l$, $\forall l \in [1, N]$, must be jointly optimized in order to minimize $\|x\|^2$. For instance given two indices $l_1$, $l_2 \in [1, N]$, when we find a candidate of $\omega$ (or $\omega_2$) that reduces $\beta_{l_1}$ it might increase $\beta_{l_2}$, at the meantime. As a consequence, such a candidate might not minimise $\|x\|^2$. In this aspect, the conventional VP outperforms D2VP since it enjoys more degrees of freedom in the optimization procedure. On the other hand, the iterative process facilitates D2VP with increased number of degrees of freedom, and it leads D2VP to a better sub-optimum point.

*B. The Optimum D2VP*

In this section, it will be shown that the objective function (11) has a closed-form solution, with which the optimum decision $\omega_2^*$ can be obtained with low complexity.

In order to demonstrate a clear pathway to the optimum solution of D2VP, our derivation will start from the continuous version of $\omega_2$, which is defined by $\bar{\omega}_2 \triangleq [\bar{\omega}_{n_1}, \bar{\omega}_{n_2}]^T$ with $\bar{\omega}_n$ to be complex. Once we find the optimum solution $\bar{\omega}_2^*$, based upon which the integer version $\omega_2^*$ will be determined. Moreover, without loss of generality, we drop the iteration index ($i$) throughout the mathematical work in this section, and this is for the sake of notation simplicity. Let us define a cost function

$$f(\bar{\omega}_2) \triangleq \|\bar{s} - \alpha \tilde{H} \bar{\omega}_2\|^2 \quad (17)$$
$$= \|\bar{s}\|^2 - 2\alpha \Re(\bar{s}^H \tilde{H} \bar{\omega}_2) + \alpha^2 \|\tilde{H} \bar{\omega}_2\|^2, \quad (18)$$

where $\Re(\cdot)$ denotes the real part of a complex value. Then, we let $\partial f(\bar{\omega}_2)/\partial \bar{\omega}_2 = 0$ and immediately obtain a standard form of Wiener equation

$$\bar{\omega}_2^* = \alpha^{-1}(\tilde{H}^H \tilde{H})^{-1} \tilde{H}^H \bar{s}. \quad (19)$$

Hence, $\bar{\omega}_2^*$ is the optimum solution, which minimizes the cost function (17). However, the optimum of $\omega_2$ is not as simple as

$$\omega_2^* = \text{round}(\Re(\bar{\omega}_2^*)). \quad (20)$$

This is because the terms $\omega_{n_1}$, $\omega_{n_2}$ have to be jointly optimized, and the round operation in (20) forms decision in an individual manner. Indeed, the optimum vector $\omega_2^*$ can be found by searching exhaustively within the range

$\omega_2^* \in \{\text{round}(\Re(\bar{\omega}_2^*)) \pm d\},$ where d denotes the radius of the searching range. However, this will cost the computational complexity of $\mathcal{O}(4d^2)$. Next, we will show that there exists a closed-form solution of $\omega_2^*$ such that the exhaustive search can be avoided.

*Theorem 1:* Given $n = n_1, n_2$ and

$$\delta_n^\perp \triangleq \Re(\text{round}(\bar{\omega}_n) - \bar{\omega}_n), \qquad (21)$$

$$\delta_n \triangleq \omega_n - \Re(\bar{\omega}_n), \qquad (22)$$

$\delta_{n_2}$ can be determined by

$$\delta_{n_2} = \text{round}\left( -\frac{\Re(\tilde{\mathbf{h}}_{n_2}^H \tilde{\mathbf{h}}_{n_1})\delta_{n_1}}{\|\tilde{\mathbf{h}}_{n_2}\|^2} - \delta_{n_2}^\perp \right) + \delta_{n_2}^\perp, \qquad (23)$$

and $\delta_{n_1}^2$ is upper bounded by

$$\delta_{n_1}^2 \leq (\delta_{n_1}^\perp)^2 + \frac{\|\tilde{\mathbf{h}}_{n_2}\|^4}{4(\|\tilde{\mathbf{h}}_{n_1}\|^2\|\tilde{\mathbf{h}}_{n_2}\|^2 - \Re(\tilde{\mathbf{h}}_{n_2}^H \tilde{\mathbf{h}}_{n_1})^2)}, \qquad (24)$$

where $\tilde{\mathbf{h}}_n$, $n = n_1, n_2$, are two column vectors of $\tilde{\mathbf{H}}$.

*Proof:* See Appendix B.

*Theorem* 1 shows that $\omega_{n_2}^*$ is uniquely determined given $\omega_{n_1}^*$. Moreover, $(\omega_{n_1}^* - \Re(\bar{\omega}_{n_1}))^2 = \delta_{n_1}^2$ is upper bounded by (24). Computer simulations have shown that for most of cases $\delta_{n_1}^2$ only have one (around 79%) or two candidates (around 20%) within the range (24), and thus the computational complexity of finding the optimum $\omega_{n_1}^*$ is linear.

As a summary, the $i^{\text{th}}$ iterative process of the optimum D2VP is described by

*The $i^{\text{th}}$ Iterative Process of The Optimum D2VP*

**Start**
Given the indices $n_1, n_2$, form the matrix $\tilde{\mathbf{H}}$;
   1. Let $\bar{\mathbf{s}} = \bar{\mathbf{s}}(i-1)$; and compute $\bar{\omega}_2^*$ via (19);
   2. Compute $\delta_{n_1}^\perp$ and $\delta_{n_2}^\perp$ via (21);
   3. Compute the upper bound of $\delta_{n_1}^2$ via (24);
   4. Given a candidate of $\delta_{n_1}$ within the range, compute the corresponding $\delta_{n_2}$;
   5. Use $\delta_{n_1}, \delta_{n_2}$ to compute $\omega_{n_1}, \omega_{n_2}$ via (22);
   6. Apply $\omega_{n_1}, \omega_{n_2}$ into (11) and find the optimum $\omega^*$.
Repeat the above until all combinations of $(n_1, n_2)$ are visited
**End**

*C. D2VP with Complex $\omega$*

The optimum D2VP presented in Section II-B is for the case when $\omega$ is a real vector. When $\omega$ is complex, we can form an $N \times 2N$ matrix $\mathbf{H}_c = [\mathbf{H}^\dagger, j\mathbf{H}^\dagger]$ and a $2N \times 1$ vector $\omega_r = [\Re(\omega)^T, \Im(\omega)^T]^T$. Then, the objective function (7) can be expressed by

$$\omega_r^* = \arg\min_{\omega_r} \|\bar{\mathbf{s}} - \alpha\mathbf{H}_c\omega_r\|^2. \qquad (25)$$

Given $n_1, n_2 \in [1, 2N]$, the matrix $\tilde{\mathbf{H}}$ is formed by collecting the $n_1^{th}$ and $n_2^{th}$ column vector of $\mathbf{H}_c$, and accordingly the vector $\omega_2$ is formed by the $n_1^{th}$ and $n_2^{th}$ element of $\omega_r$. In this case, the objective function (11) still holds, and the optimum D2VP presented in Section II-B can be straightforwardly employed to offer the optimum solution for the case of complex $\omega$.

The only difference between the cases with complex and real version of $\omega$ is: the complex version requires searching over $N(2N - 1)$ possible combinations of $(n_1, n_2)$, and this increases the computational complexity by around 3 folds. On the other hand, since $\omega_r$ doubles the size of the perturbation vector, the error term $\varepsilon_l$ in (14)-(16) is largely reduced. As a consequence, the complex version should outperform the real version in terms of the performance optimality, and this conclusion has been confirmed through computer simulations.

*D. Analysis of Computational Complexity*

The overall computational complexity of the optimum D2VP is easy to calculate. Take the case of real $\omega$ as an example. For each iteration, the optimum D2VP spends the complexity of $\frac{N(N-1)}{2}$ for the exhaustive search over all possible combinations of $(n_1, n_2)$. Moreover, for each combination, it will need to search all candidates of $\delta_{n_1}$, (say $\mathcal{L}$ candidates). Given $I$ iterations of the D2VP, the overall complexity paid of searching is

$$\frac{I\mathcal{L}N(N-1)}{2}. \qquad (26)$$

However, (26) does not indicate that the optimum D2VP requires computational complexity in an order of four. This is because, for most of cases, we have $\mathcal{L} \leq 2$ and $I \leq 3$, which is not a function of $N$. Therefore, the complexity of the optimum D2VP is only in the square order of the MIMO size $N$, i.e., $\mathcal{O}(N(N-1))$. The same complexity order also holds for the complex version of D2VP. Specifically, it is given by $\mathcal{O}(N(2N-1))$.

**Appendix B**

PROOF OF THEOREM 1

Define a cost function

$$g(\omega_2) \triangleq (f(\omega_2) - f(\bar{\omega}_2^*))/\alpha^2, \qquad (27)$$

here we use a complex form of $\omega_2$ for notation simplicity. It is easy to understand

- $g(\omega_2) > 0$:
- If there exists an optimum vector $\omega_2^*$ which minimizes $f(\omega_2)$, it will also minimize $g(\omega_2)$

Then, we apply (18) into (27) and obtain

$$g(\omega_2) = -2\alpha^{-1}\Re(\bar{\mathbf{s}}^H\tilde{\mathbf{H}}(\omega_2 - \bar{\omega}_2^*)) + \omega_2^H\tilde{\mathbf{H}}^H\tilde{\mathbf{H}}\omega_2 - (\bar{\omega}_2^*)^H\tilde{\mathbf{H}}^H\tilde{\mathbf{H}}\bar{\omega}_2^*. \qquad (28)$$

Further, we define $\delta \triangleq \omega_2 - \bar{\omega}_2^*$ and apply (19) into (28). It is tedious but straightforward to have

$$g(\delta) = \delta^H\tilde{\mathbf{H}}^H\tilde{\mathbf{H}}\delta. \qquad (29)$$

The above derivation holds generally for the complex form. When $\delta$ takes the real form $\delta \triangleq [\delta_{n_1}, \delta_{n_2}]^T$, (29) can be expressed by

$$g(\delta) = \|\tilde{\mathbf{h}}_{n_1}\|^2\delta_{n_1}^2 + \|\tilde{\mathbf{h}}_{n_2}\|^2\delta_{n_2}^2 + 2\Re(\tilde{\mathbf{h}}_{n_2}^H\tilde{\mathbf{h}}_{n_1})\delta_{n_1}\delta_{n_2} \qquad (30)$$

Given $\delta_{n_1}$ $g(\delta)$ is a quadratic form of $\delta_{n_2}$. If $\delta_{n_2}$ could take an arbitrary value, then (30) achieves its minimum at

$$\delta_{n_2} = -\frac{\Re(\tilde{\mathbf{h}}_{n_2}^H \tilde{\mathbf{h}}_{n_1})\delta_{n_1}}{\|\tilde{\mathbf{h}}_{n_2}\|^2}. \qquad (31)$$

However, it is not the case. Therefore, $\delta_{n_2}$ takes the value specified in (23), with which we can ensure that $(\delta_{n_2} + \Re(\ddot{\omega}_{n_2}))$ is the best integer.

Then, we plug (23) into (30) in order to obtain $g(\delta)$ as a function only of $\delta_{n_1}$. However, (23) is not mathematically tractable. Hence, we redefine $\delta_{n_2}$ into

$$\delta_{n_2} = -\frac{\Re(\tilde{\mathbf{h}}_{n_2}^H \tilde{\mathbf{h}}_{n_1})\delta_{n_1}}{\|\tilde{\mathbf{h}}_{n_2}\|^2} + \theta_{n_2}(\delta_{n_1}), \qquad (32)$$

where $\theta_{n_2}(\delta_{n_1}) \in$ [-0.5, 0.5] is the difference between (23) and (31). Plugging (32) into (30) results in

$$g(\delta_{n_1}) = \frac{(\|\tilde{\mathbf{h}}_{n_1}\|^2\|\tilde{\mathbf{h}}_{n_2}\|^2 - \Re(\tilde{\mathbf{h}}_{n_2}^H \tilde{\mathbf{h}}_{n_1})^2)\delta_{n_1}^2}{\|\tilde{\mathbf{h}}_{n_2}\|^2} + \|\tilde{\mathbf{h}}_{n_2}\|^2\theta_{n_2}^2(\delta_{n_1}). \qquad (33)$$

Now, our objective is to minimize (33) by configuring of $\delta_{n_1}$. It is observed that the first term at the right hand of (33) monotonically increases with respect to $\delta_{n_1}^2$, and the second term falls into the range of $[0, \frac{\|\tilde{\mathbf{h}}_{n_2}\|^2}{4}]$.

Denote $(\delta_{n_1}^\top)^2$ to be the upper bound of $\delta_{n_1}^2$. If (33) reaches its minimum at $\delta_{n_1}^2 = (\delta_{n_1}^\top)^2$, then the minimum of $g(\delta_{n_1})$ is lower bounded by

$$g(\delta_{n_1}) \geq \frac{(\|\tilde{\mathbf{h}}_{n_1}\|^2\|\tilde{\mathbf{h}}_{n_2}\|^2 - \Re(\tilde{\mathbf{h}}_{n_2}^H \tilde{\mathbf{h}}_{n_1})^2)(\delta_{n_1}^\top)^2}{\|\tilde{\mathbf{h}}_{n_2}\|^2}. \qquad (34)$$

Moreover, (21) gives the minimum of $\delta_{n_1}^2$, which is $(\delta_{n_1}^\perp)^2$. Applying $\delta_{n_1}^2 = (\delta_{n_1}^\perp)^2$ into (33), we obtain the upper bounded of $g(\delta_{n_1})$

$$g(\delta_{n_1}) \leq \frac{(\|\tilde{\mathbf{h}}_{n_1}\|^2\|\tilde{\mathbf{h}}_{n_2}\|^2 - \Re(\tilde{\mathbf{h}}_{n_2}^H \tilde{\mathbf{h}}_{n_1})^2)(\delta_{n_1}^\perp)^2}{\|\tilde{\mathbf{h}}_{n_2}\|^2} + \frac{\|\tilde{\mathbf{h}}_{n_2}\|^2}{4}. \qquad (35)$$

Hence, the lower bound in (34) has to be no larger than the upper bound in (35). By solving this inequality we will get the upper bound in (24), and *Theorem 1* is therefore proved.

## Claims

1.  A signal precoder (36) for use with a signal transmitter (30) comprising a plurality of antennas (32) for transmitting a plurality of signal components to a receiver over a communications channel in which one or more properties of the communications channel are described by a plurality of values which scale the components of the signal in a plurality of dimensions during transmission,
    the precoder arranged to perform non-linear precoding on a source signal **S**, prior to signal transmission, the precoder comprising:

    a balancer (64) for determining a plurality of optimised amounts of signal perturbation required to be applied to one or more source signal components to minimise the energy of the signal transmission, when respectively scaled by each of the values describing one or more properties of the communications channel;

a selector (53) for selecting which of the optimised amounts of signal perturbations results in signal transmission having the least energy when scaled by the values describing the one or more properties of the communications channel, wherein the one or more properties of the communications channel are contained in a channel matrix **H**; and

a feature extractor (61) for selecting a subset, $L$ of the plurality of $M$ singular values $\lambda$ obtained by singular value decomposition of channel matrix **H**, for $1 \leq L < M$, which, when applied to the signal, perform a predetermined proportion of the scaling of the signal components;

wherein the precoder is arranged to perform non-linear precoding on the source signal by applying the selected optimised signal perturbation to the source signal and to output the precoded signal;

wherein:

the amount of perturbation is represented by an auxiliary vector $\underline{\textbf{\textit{A}}}$ having integer components, scaled by a coefficient $\alpha$ which is dependent on the modulation of $\underline{\textbf{\textit{S}}}$, and

the balancer is arranged to perform the optimisation by optimising one or more components of $\underline{\textbf{\textit{A}}}$ which minimise the quantity $|\lambda_l \underline{\textbf{v}}_l(\underline{\textbf{S}} + a\underline{\textbf{A}})|^2$ for each $l^{\text{th}}$ singular value $\lambda_l$ and $l^{\text{th}}$ right-singular vector, $\underline{\textbf{v}}_l$, of $\overline{\textbf{H}}$ where $1 \leq l \leq L$.

2. A signal precoder according to claim 1 wherein the subset of values is as low as 2-3% of the total number of values describing one or more properties of the communications channel, and the predetermined scaling proportion is 99% or more.

3. A signal precoder according to claim 1 or claim 2, wherein the feature extractor (61) is arranged to select a predetermined subset of the plurality of values describing the communications channel, or to determine a predetermined subset using a look-up table, in dependence upon the modulation of the source signal.

4. A signal precoder according to any one of the preceding claims, further comprising a transform module (21) for equalising the one or more properties of the communications channel by processing the precoded signal prior to transmission.

5. A signal precoder according to any one of the preceding claims in which the balancer (64) is configured to determine a plurality of optimised amounts of signal perturbation required to be applied to only two signal components to minimise the energy of the signal transmission.

6. A signal transmitter containing a signal precoder according to any one of the preceding claims, the signal transmitter (30) having a plurality of antennas representing a multiple input multiple output MIMO communications module (32) of a size which is at least 64 by 64, and arranged to transmit the precoded signal.

7. A communications system comprising the transmitter of claim 6, and further comprising:

a plurality of access points (11) arranged to receive signals from the signal transmitter via an interface; and

a plurality of receivers (12) arranged to receive signals transmitted via the access points.

8. A communications system according to claim 7, which is a cloud-based radio access network (10), and the interface is the fronthaul network (15).

9. A method of precoding a signal comprising a plurality of signal components for transmission over a communications channel, the method comprising:

describing one or more properties of the communications channel with a plurality of values which scale the components of the signal in a plurality of dimensions during transmission;

receiving a source signal $\underline{\textbf{\textit{S}}}$; and

performing non-linear precoding on the source signal, the precoding comprising:

determining a plurality of optimised amounts of signal perturbation required to be applied to one or more source signal components to minimise the energy of the signal transmission, when respectively scaled by each of the values describing one or more properties of the communications channel; and

selecting which of the optimised amounts of signal perturbations results in signal transmission having the least energy when scaled by the values describing the one or more properties of the communications channel;

wherein the one or more properties of the communications channel are contained in a channel matrix **H**;
selecting a subset, *L*, of the plurality of *M* singular values $\lambda$ obtained by singular value decomposition of channel matrix **H**, for $1 \leq L < M$ which, when applied to the signal, perform a predetermined proportion of the scaling of the signal components;
wherein non-linear precoding is performed on the source signal by applying the selected optimised signal perturbation to the source signal and the precoded signal is output for transmission;
wherein:

the amount of perturbation is represented by an auxiliary vector $\underline{\boldsymbol{A}}$ having integer components, scaled by a coefficient $\alpha$ which is dependent on the modulation of $\underline{\boldsymbol{S}}$, and
the method comprises perform the optimisation by optimising one or more components of $\underline{\boldsymbol{A}}$ which minimise the quantity $|\lambda_l \underline{\boldsymbol{v}}_l (\underline{\boldsymbol{S}} + a\underline{\boldsymbol{A}})|^2$ for each $l^{\text{th}}$ singular value $\lambda_l$ and $l^{\text{th}}$ right-singular vector, $\underline{\boldsymbol{v}}_l$, of $\overline{\boldsymbol{H}}$ where $1 \leq l \leq L$.

10. A computer program which, when executed by a processor is arranged to perform the method of claim 9.


**Patentansprüche**

1. Signalvorcodierer (36) zur Verwendung mit einem Signalgeber (30), umfassend eine Vielzahl von Antennen (32) zum Übertragen einer Vielzahl von Signalkomponenten an einen Empfänger über einen Kommunikationskanal, in dem eine oder mehrere Eigenschaften des Kommunikationskanals durch eine Vielzahl von Werten beschrieben sind, die die Komponenten des Signals während der Übertragung in einer Vielzahl von Dimensionen anpassen, wobei der Vorcodierer angeordnet ist, um nichtlineares Vorcodieren auf einem Quellensignal $\underline{\boldsymbol{S}}$ vor der Signalübertragung durchzuführen, wobei der Vorcodierer Folgendes umfasst:

einen Ausgleichsregler (64) zum Bestimmen einer Vielzahl von optimierten Mengen von Signalperturbation, die notwendig sind, um für einen oder mehrere Quellensignalkomponenten angewandt zu werden, um die Energie der Signalübertragung zu minimieren, wenn sie durch jeden der Werte, die eine oder mehrere Eigenschaften des Kommunikationskanals beschreiben, entsprechend angepasst sind;
einen Selektor (53) zum Auswählen, welche der optimierten Mengen von Signalperturbationen dazu führt, dass Signalübertragungen die wenigste Energie aufweisen, wenn sie durch die Werte angepasst werden, die die einen oder die mehreren Eigenschaften des Kommunikationskanals beschreiben, wobei die einen oder die mehreren Eigenschaften des Kommunikationskanals in einer Kanalmatrix **H** enthalten sind; und
einen Merkmalextraktor (61) zur Auswahl einer Teilmenge *L* der Vielzahl von *M* Singulärwerten $\lambda$, die durch Singulärwertzerlegung der Kanalmatrix **H** für $1 \leq L < M$ erhalten werden, die, wenn auf das Signal angewandt, einen vorbestimmten Anteil des Anpassens der Signalkomponente durchführt;
wobei der Vorcodierer dazu angeordnet ist, um nichtlineares Vorcodieren auf einem Quellensignal durch Anwenden der ausgewählten optimierten Signalperturbation auf das Quellensignal durchzuführen und das vorcodierte Signal auszugeben;
wobei:

die Menge der Perturbation durch einen Hilfsvektor $\underline{\boldsymbol{A}}$ dargestellt wird, der ganzzahlige Komponente aufweist, die durch einen Koeffizienten $\alpha$, der von der Modulation von $\underline{\boldsymbol{S}}$ abhängig ist, angepasst sind, und der Ausgleichsregler dazu angeordnet ist, die Optimierung durch Optimieren einer oder mehrerer Komponenten von $\underline{\boldsymbol{A}}$ durchzuführen, die die Größe $|\lambda_l \underline{\boldsymbol{v}}_l (\underline{\boldsymbol{S}} + a\underline{\boldsymbol{A}})|^2$ für jeden $l^{\text{ten}}$ Singulärwert $\lambda_l$ und $l^{\text{ten}}$ Rechtssingulärvektor, $\underline{\boldsymbol{v}}_l$, von **H**, wo $1 \leq l \leq L$ ist, minimiert.

2. Signalvorcodierer nach Anspruch 1, wobei die Teilmenge von Werten nur 2-3% der Gesamtanzahl von Werten beträgt, die eine oder mehrere Eigenschaften des Kommunikationskanals beschreiben, und der vorbestimmte Anpassungsanteil 99% oder mehr beträgt.

3. Signalvorcodierer nach Anspruch 1 oder 2, wobei der Merkmalextraktor (61) dazu angeordnet ist, eine vorbestimmte Teilmenge der Vielzahl von Werten, die den Kommunikationskanal beschreiben, auszuwählen, oder eine vorbestimmte Teilmenge unter Verwendung einer Nachschlagtabelle in Abhängigkeit der Modulation des Quellensignals zu bestimmen.

4. Signalvorcodierer nach einem der vorstehenden Ansprüche, ferner umfassend ein Transformationsmodul (21) zum Ausgleich der einen oder mehreren Eigenschaften des Kommunikationskanals durch Verarbeiten des vorcodierten Signals vor der Übertragung.

5. Signalvorcodierer nach einem der vorstehenden Ansprüche, in denen der Ausgleichsregler (64) dazu konfiguriert ist, um eine Vielzahl von optimierten Mengen von Signalperturbation zu bestimmen, die notwendig sind, um auf nur zwei Signalkomponenten angewandt zu werden, um die Energie der Signalübertragung zu minimieren.

6. Signalgeber, der einen Signalvorcodierer nach einem der vorstehenden Ansprüche beinhaltet, wobei der Signalgeber (30) eine Vielzahl von Antennen aufweist, die ein Multiple-Input-Multiple-Output-(MIMO)-Kommunikationsmodul (32) mit einer Größe, die mindestens 64 mal 64 beträgt, darstellen und dazu angeordnet sind, das vorcodierte Signal zu übertragen.

7. Kommunikationssystem, umfassend den Signalgeber nach Anspruch 6, und ferner umfassend:

eine Vielzahl von Zugangspunkten (11), die dazu angeordnet sind, Signale von dem Signalgeber über eine Schnittstelle zu empfangen; und
eine Vielzahl von Empfängern (12), die dazu angeordnet sind, Signale zu empfangen, die über die Zugangspunkte übertragen werden.

8. Kommunikationssystem nach Anspruch 7, welches ein cloudbasiertes Funkzugangsnetz (10) ist, und wobei die Schnittstelle das Fronthaul-Netz (15) ist.

9. Verfahren zum Vorcodieren eines Signals, umfassend eine Vielzahl von Signalkomponenten für die Übertragung über einen Kommunikationskanal, wobei das Verfahren Folgendes umfasst:

Beschreiben einer oder mehrere Eigenschaften des Kommunikationskanals mit einer Vielzahl von Werten, die die Komponenten des Signals in einer Vielzahl von Dimensionen während der Übertragung anpassen;
Empfangen eines Quellensignals $\underline{S}$; und
Durchführen nichtlinearen Vorcodierens an dem Quellensignal, wobei das Vorcodieren Folgendes umfasst:

Bestimmen einer Vielzahl von optimierten Mengen von Signalperturbation, die dafür notwendig sind, um auf ein oder mehrere Quellensignalkomponenten angewandt zu werden, um die Energie der Signalübertragung zu minimieren, wenn sie durch jeden der Werte, der eine oder mehrere Eigenschaften des Kommunikationskanals beschreibt, entsprechend angepasst werden; und
Auswählen, welche der optimierten Mengen von Signalperturbationen zu Signalübertragung mit der wenigsten Energie führen, wenn sie durch die Werte, die die eine oder die mehreren Eigenschaften des Kommunikationskanals beschreiben, angepasst sind;

wobei die einen oder mehreren Eigenschaften des Kommunikationskanals in einer Kanalmatrix **H** enthalten sind;
Auswählen einer Teilmenge $L$ aus der Vielzahl von M Singulärwerten $\lambda$, die durch Singulärwertzerlegung der Kanalmatrix **H** für $1{\leq}L{<}M$ erhalten werden, die, wenn auf das Signal angewandt, einen vorbestimmten Anteil des Anpassens der Signalkomponente durchführt;
wobei nichtlineares Vorcodieren auf dem Quellensignal durch Anwenden der ausgewählten optimierten Signalperturbation auf das Quellensignal durchgeführt wird, und das vorcodierte Signal für die Übertragung ausgegeben wird;
wobei:

die Menge der Perturbation durch einen Hilfsvektor **A** dargestellt wird, der ganzzählige Komponenten aufweist, die durch einen Koeffizienten $\alpha$ angepasst werden, der von der Modulation von $\underline{S}$ abhängig ist, und das Verfahren das Durchführen der Optimierung durch Optimieren einer oder mehrerer Komponenten von $\underline{A}$ umfasst, die die Größe $|\lambda_l\underline{v}_l(\underline{S}+a\underline{A})|^2$ für jeden $l^{ten}$ Singulärwert $\lambda_l$ und $l^{ten}$ Rechtssingulärvektor, $\underline{v}_l$, von $\underline{H,}$ wo $1{\leq}l{\leq}L$ ist, minimiert.

10. Computerprogramm, das, wenn es durch einen Prozessor ausgeführt wird, dazu angeordnet ist, das Verfahren nach Anspruch 9 durchzuführen.

**Revendications**

1. Précodeur de signal (36) pour l'utilisation avec un émetteur de signal (30) comprenant une pluralité d'antennes (32) pour transmettre une pluralité de composantes de signal à un récepteur sur un canal de communication, dans lequel une ou plusieurs propriétés du canal de communication sont décrites par une pluralité de valeurs qui mettent à l'échelle les composantes du signal dans une pluralité de dimensions durant la transmission, le précodeur étant agencé pour effectuer un précodage non linéaire sur un signal source $\underline{S}$, avant la transmission de signal, le précodeur comprenant :

   un équilibreur (64) pour déterminer une pluralité de quantités optimisées de perturbation de signal devant être appliquées à une ou plusieurs composantes de signal source pour minimiser l'énergie de la transmission de signal, quand elles sont respectivement mises à l'échelle par chacune des valeurs décrivant une ou plusieurs propriétés du canal de communication ;
   un sélecteur (53) pour sélectionner celle des quantités optimisées de perturbations de signal qui entraîne une transmission de signal ayant la moindre énergie quand elle est mise à l'échelle par les valeurs décrivant les une ou plusieurs propriétés du canal de communication, dans lequel les une ou plusieurs propriétés du canal de communication sont contenues dans une matrice de canal H ; et
   un extracteur de caractéristique (61) pour sélectionner un sous-ensemble, L, de la pluralité de M valeurs singulières $\lambda$ obtenues par une décomposition de valeurs singulières de la matrice de canal H, pour $1 \leq L \leq M$, qui, quand elles sont appliquées au signal, réalisent une proportion prédéterminée de la mise à l'échelle des composantes de signal ;
   dans lequel le précodeur est agencé pour effectuer un précodage non linéaire sur le signal source en appliquant la perturbation de signal optimisée sélectionnée au signal source et délivrer en sortie le signal précodé ;
   dans lequel :

      la quantité de perturbation est représentée par un vecteur auxiliaire $\underline{A}$ ayant des composantes entières, mises à l'échelle par un coefficient $\alpha$ qui est dépendant de la modulation de $\underline{S}$, et
      l'équilibreur est agencé pour effectuer l'optimisation en optimisant une ou plusieurs composantes de $\underline{A}$ qui minimisent la quantité $|\lambda_l \underline{v}_l(\underline{S} + \alpha\underline{A})|^2$ pour chaque l-ième valeur singulière $\lambda_l$ et l'ième vecteur singulier droit, $\underline{v}_l$, de H, où $1 \leq 1 \leq L$.

2. Précodeur de signal selon la revendication 1, dans lequel le sous-ensemble de valeurs est aussi faible que 2 à 3% du nombre total de valeurs décrivant une ou plusieurs propriétés du canal de communication, et la proportion de mise à l'échelle prédéterminée est de 99% ou plus.

3. Précodeur de signal selon la revendication 1 ou la revendication 2, dans lequel l'extracteur de caractéristique (61) est agencé pour sélectionner un sous-ensemble prédéterminé de la pluralité de valeurs décrivant le canal de communication, ou pour déterminer un sous-ensemble prédéterminé en utilisant une table de consultation, en fonction de la modulation du signal source.

4. Précodeur de signal selon l'une quelconque des revendications précédentes, comprenant en outre un module de transformation (21) pour égaliser les une ou plusieurs propriétés du canal de communication en traitant le signal précodé avant la transmission.

5. Précodeur de signal selon l'une quelconque des revendications précédentes, dans lequel l'équilibreur (64) est configuré pour déterminer une pluralité de quantités optimisées de perturbation de signal devant être appliquées à seulement deux composantes de signal pour minimiser l'énergie de la transmission de signal.

6. Émetteur de signal contenant un précodeur de signal selon l'une quelconque des revendications précédentes, l'émetteur de signal (30) ayant une pluralité d'antennes représentant un module de communication à entrées multiples et sorties multiples MIMO (32) d'une taille qui est d'au moins 64 par 64, et agencé pour transmettre le signal précodé.

7. Système de communication comprenant l'émetteur selon la revendication 6 et comprenant en outre :

   une pluralité de points d'accès (11) agencés pour recevoir des signaux à partir de l'émetteur de signal via une interface ; et
   une pluralité de récepteurs (12) agencés pour recevoir des signaux transmis via les points d'accès.

8. Système de communication selon la revendication 7, qui est un réseau d'accès radio basé sur le nuage (10) et l'interface est un réseau de fronthaul (15).

9. Procédé de précodage d'un signal comprenant une pluralité de composantes de signal pour la transmission sur un canal de communication, le procédé comprenant :

la description d'une ou plusieurs propriétés du canal de communication avec une pluralité de valeurs qui mettent à l'échelle les composantes du signal dans une pluralité de dimensions durant la transmission ;
la réception d'un signal source $\underline{S}$ ; et
l'exécution d'un précodage non linéaire sur le signal source, le précodage comprenant :

la détermination d'une pluralité de quantités optimisées de perturbation de signal devant être appliquées à une ou plusieurs composantes de signal source pour minimiser l'énergie de la transmission de signal, quand elles sont respectivement mises à l'échelle par chacune des valeurs décrivant une ou plusieurs propriétés du canal de communication ; et
la sélection de celle des quantités optimisées de perturbations de signal qui entraîne une transmission d'énergie ayant la moindre énergie quand elle est mise à l'échelle par les valeurs décrivant les une ou plusieurs propriétés du canal de communication ;

dans lequel les une ou plusieurs propriétés du canal de communication sont contenues dans une matrice de canal H ;
la sélection d'un sous-ensemble, L, de la pluralité de M valeurs singulières $\lambda$ obtenues par une décomposition de valeurs singulières de la matrice de canal H, pour $1 \leq L \leq M$, qui, quand elles sont appliquées au signal, réalisent une proportion prédéterminée de la mise à l'échelle des composantes de signal ;
dans lequel un précodage non linéaire est effectué sur le signal source en appliquant la perturbation de canal optimisée sélectionnée au signal source et le signal précodé est délivré en sortie pour la transmission ;
dans lequel :

la quantité de perturbation est représentée par un vecteur auxiliaire $\underline{A}$ ayant des composantes entières, mises à l'échelle par un coefficient $\alpha$ qui est dépendant de la modulation de $\underline{S}$, et
le procédé comprend la récalisation de l'optimisation en optimisant une ou plusieurs composantes de $\underline{A}$ qui minimisent la quantité $|\lambda_l v_l (S + \alpha \underline{A})|^2$ pour chaque l-ième valeur singulière $\lambda_l$ et l'ième vecteur singulier droit, $v_l$, de H, où $1 \leq l \leq L$.

10. Programme d'ordinateur qui, quand il est exécuté par un processeur est agencé pour réaliser le procédé selon la revendication 9.

FIGURE 1

EP 3 224 964 B1

FIGURE 2

FIGURE 3

**FIGURE 4**

FIGURE 5

**FIGURE 6**

FIGURE 7

**FIGURE 8**

**FIGURE 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2104259 A

**Non-patent literature cited in the description**

- **M. TOMLINSON.** New automatic equaliser employing modulo arithmetic. *Electron. Lett.,* March 1971, vol. 7, 138-139
- **H. HARASHIMA ; H. MIYAKAWA.** Matched-transmission technique for channels with intersymbol interference. *IEEE Trans. Commun.,* August 1972, vol. COM-20, 774-780
- **B. H. HOCHWALD ; C. B. PEEL ; A. L. SWINDLE-HURST.** A vector perturbation technique for near-capacity multiantenna multiuser communication - Part II: perturbation. *IEEE Trans. Commun.,* March 2005, vol. 53, 537-544
- **F. RUSEK et al.** Scaling up MIMO: opportunities and challenges with very large arrays. *IEEE Signal Processing Magazine,* January 2013, 40-60
- **MASOUROS CHRISTOS et al.** Maximising Energy Efficiency in the Vector Precoded MU-MISO Downlink by Selective Perturbation. *IEEE transacitons on wireless communications,* September 2014, vol. 13 (9
- **B. H. HOCHWALD ; C. B. PEEL ; A. L. SWINDLE-HURST.** A vector perturbation technique for near-capacity multiantenna multiuser communication - Part II: perturbation. *IEEE Trans. Commun,* March 2005, vol. 53, 537-544